(19) Europäisches Patentamt
European Patent Office
Office européen des brevets

(11) **EP 2 614 881 A1**

(12) **EUROPEAN PATENT APPLICATION**
published in accordance with Art. 153(4) EPC

(43) Date of publication:
**17.07.2013 Bulletin 2013/29**

(51) Int Cl.:
*B01D 69/00* (2006.01)  *B01D 69/10* (2006.01)
*B01D 69/12* (2006.01)

(21) Application number: **11823561.3**

(22) Date of filing: **06.09.2011**

(86) International application number:
**PCT/JP2011/070240**

(87) International publication number:
**WO 2012/033086 (15.03.2012 Gazette 2012/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2010 JP 2010199558**

(71) Applicant: **Toray Industries, Inc.
Tokyo 103-8666 (JP)**

(72) Inventors:
• **TAKAGI, Kentaro**
  **Shiga 520-8558 (JP)**
• **KIMURA, Masahiro**
  **Shiga 520-8558 (JP)**
• **HIROZAWA, Hiroho**
  **Shiga 520-8558 (JP)**

(74) Representative: **Hoefer & Partner
Pilgersheimer Straße 20
81543 München (DE)**

(54) **SEPARATION MEMBRANE, SEPARATION MEMBRANE ELEMENT, AND METHOD FOR PRODUCING SEPARATION MEMBRANE**

(57)  The present invention provides a separation membrane having a plurality of concavoconvex parts which have a height difference of from 100 μm to 2000 μm and are formed on at least one surface of the separation membrane, in which an average value d1 of a minimum thickness and an average value d2 of a maximum thickness in the concavoconvex parts satisfy the following relational expression [1]: $0.8 \leq d1/d2 \leq 1.0$.

*Fig. 6*

**Description**

TECHNICAL FIELD

The present invention relates to a separation membrane and a separation membrane element to be used for separating components contained in fluid such as liquid or vapor, and relates to a method for producing the separation membrane.

BACKGROUND ART

Various methods are known for separating components contained in fluid such as liquid or vapor. For example, a case of a technique for removing ionic substances contained in seawater, brine water or the like is described, for which, recently, use of a separation method with a separation membrane element has become expanding as a process for energy saving and resources saving. The separation membrane to be used in the separation method with a separation membrane element includes microfiltration membranes, ultrafiltration membranes, nanofiltration membranes, reverse osmosis membranes, forward osmosis membranes and others in point of the pore size and the separation function thereof; and these membranes are used, for example, for obtaining drinkable water from seawater, brine water or also from water containing harmful materials or the like, as well as for production of ultrapure water for industrial use, and also for drainage treatment, recovery of valuables, etc., and can be used suitably for different purposes depending on the components intended to be separated therewith and on the separation performance thereof.

Separation membranes are all alike in that a raw fluid is fed to one surface of the separation membrane and a permeated fluid is obtained through the other surface thereof. The separation membrane element may be configured by binding up a large number of sheets of a separation membrane element of various shapes to provide a large membrane area so that a large amount of the permeated fluid can be obtained per the unit element. Various types of such elements are produced, including those of spiral type, hollow-fiber type, plate-and-flame type, rotating flat-membrane type and flat-membrane integration type, in accordance with the intended use applications and purposes.

For example, a fluid separation membrane element for use for reverse osmosis filtration is described as one example. As the separation membrane element member, widely used is a spiral-type separation membrane element which comprises members of a feed-side passage member for feeding a raw fluid to the fed fluid side of the separation membrane, a separation membrane for separating the components contained in the raw fluid, and a permeate-side passage member for leading the permeated fluid that has passed through the separation membrane and has been separated from the raw fluid to a porous water-collecting tube and in which those members are wound up around the porous water-collecting tube therein, as capable of taking out a large amount of the permeated fluid under pressure applied to the raw fluid.

Recently, with the increasing demand for reducing the cost in water production with a separation membrane element, there has increased the demand for reducing the cost of separation membrane elements, and improvements of separation membranes, various passage members and element members have been proposed for cost reduction.

For example, Patent Document 1 describes use of concavoconvex-embossed sheets as the permeate-side passage member; Patent Document 2 describes use of a flat membrane having concavoconvex shapes formed on the feed-side surface thereof and having hollow passages inside it, with no use of a substrate therein; and Patent Documents 3 and 4 describe use of a sheet-like composite semipermeable membrane that comprises a porous support with concavoconvex shapes formed on the surface thereof and a separation-active layer, with no use of a feed-side passage member such as a net and a permeate-side passage member such as a tricot.

BACKGROUND ART DOCUMENT

PATENT DOCUMENT

Patent Document 1: JP-A 2006-247453
Patent Document 2: JP-A 11-114381
Patent Document 3: JP-A 2010-99590
Patent Document 4: JP-A 2010-125418

## SUMMARY OF THE INVENTION

### PROBLEMS THAT THE INVENTION IS TO SOLVE

However, the above-mentioned separation membrane elements could not be said to be sufficient in point of the performance increase, especially in point of the stability performance in long-term use. For example, in the method of using the concavoconvex-embossed sheets as the permeate-side passage member described in Patent Document 1, merely the flow resistance on the permeate side can be reduced, but the flow resistance-reducing effect could not be said to be sufficient since there still exists sheet surface resistance.

In the method of using a flat membrane that has concavoconvex shapes formed on the feed-side surface thereof and has hollow passages inside it, with no use of a substrate therein, as described in Patent Document 2, since the flat membrane has inner hollow passages extending in the direction parallel to the membrane surface, it is difficult to enlarge the height of the surface concavoconvex shapes and the concavoconvex shapes are limited (regarding the concavoconvex shapes, grooves having a depth of 0.15 mm are formed in the Examples given in the patent document). Additionally, since the shapes of the permeate-side passages are also limited, the flow resistance-reducing effect on both the feed side and the permeate side could not be said to be sufficient.

In Patent Documents 3 and 4, there is described the membrane performance in a case of using a cell for flat membrane evaluation in the Examples given therein; however, in the case, the separation active layer is formed by applying a liquid reactive monomer onto the porous support having concavoconvex shapes formed on the surface thereof, and therefore the reaction would be often nonuniform. As a result, the salt removal ratio in the Examples is only about 90% or less. In addition, in Patent Documents 3 and 4, though no disclosure is given relating to the performance of a fabricated separation membrane element, it may be considered that in case where the separation membrane element is actually driven under pressure applied thereto, the cross-sectional area of the feed-side passage and that of the permeate-side passage would readily change, and not only in the initial stage but also after long-term driving, the performance of the element would readily change.

Accordingly, it is an object of the present invention to provide a separation membrane and a separation membrane element effective for enhancing the separation and removal performance of a separation membrane having concavoconvex shapes on the surface thereof, for enhancing the separation membrane performance of increasing the amount of permeated fluid per unit time, and for enhancing the chemical resistance of the membrane to acid, alkali and the like.

### MEANS FOR SOLVING THE PROBLEMS

The above-mentioned object can be attained by a separation membrane having a plurality of concavoconvex parts which have a height difference of from 100 $\mu$m to 2000 $\mu$m and are formed on at least one surface of the separation membrane, in which an average value d1 of a minimum thickness and an average value d2 of a maximum thickness in the concavoconvex parts satisfy the following relational expression [1]:

$$0.8 \leq d1/d2 \leq 1.0 \qquad [1]$$

The separation membrane is applicable to a separation membrane element.

The object can also be attained by a method for producing a separation membrane, the method including: arranging a forming component on one surface of a work-in-process separation membrane; and while the forming component is thus kept arranged thereon, pressing the work-in-process separation membrane from the other surface thereof by a liquid or vapor applied thereto, having a temperature of from 50°C to 100°C, thereby forming height differences on the surface of the work-in-process separation membrane.

### ADVANTAGE OF THE INVENTION

According to the invention, owing to the height differences formed on at least one surface of the separation membrane, highly-efficient and stable flows can be secured both on the feed side and on the permeate side with no use of a feed-side passage member such as a net and a permeate-side passage member such as a tricot. Further, during forming, surface defects hardly form on the surface of the membrane and the membrane is excellent in chemical resistance to acid, alkali and the like, and as a result, there can be obtained high-performance and highly-efficient separation membrane and separation membrane element excellent in the performance of removing separated components and in the permeability performance.

BRIEF DESCRIPTION OF THE DRAWINGS

[Fig. 1] Fig. 1 is a partly-developed perspective view showing one example of the separation membrane element of the invention.
[Fig. 2] Fig. 2 is a partly-developed perspective view showing another example of the separation membrane element of the invention.
[Fig. 3] Fig. 3 is a partly-developed perspective view showing another example of the separation membrane element of the invention.
[Fig. 4] Fig. 4 is a partly-developed perspective view showing another example of the separation membrane element of the invention.
[Fig. 5] Fig. 5 is a partly-developed perspective view showing another example of the separation membrane element of the invention.
[Fig. 6] Fig. 6 is a cross-sectional view showing one example of the separation membrane of the invention.
[Fig. 7] Fig. 7 is a cross-sectional view showing one example of the separation membrane of the invention.
[Fig. 8] Fig. 8 is a cross-sectional view showing another example of the separation membrane of the invention.

MODE FOR CARRYING OUT THE INVENTION

Embodiments of the invention are described below.

I. Separation Membrane

<Outline of Configuration of Separation Membrane>

The separation membrane separates the components from the fluid having been fed to the feed side of the separation membrane. Use of the separation membrane gives a permeate fluid having passed through the separation membrane. The separation membrane may comprise, for example, i) a separation function layer, a porous supporting layer and a substrate, or ii) a separation function layer and a substrate. The separation membrane of the embodiment ii) may be provided with a layer having the same constitution as that of the porous supporting layer in the separation membrane of the embodiment i), as the separation function layer thereof.

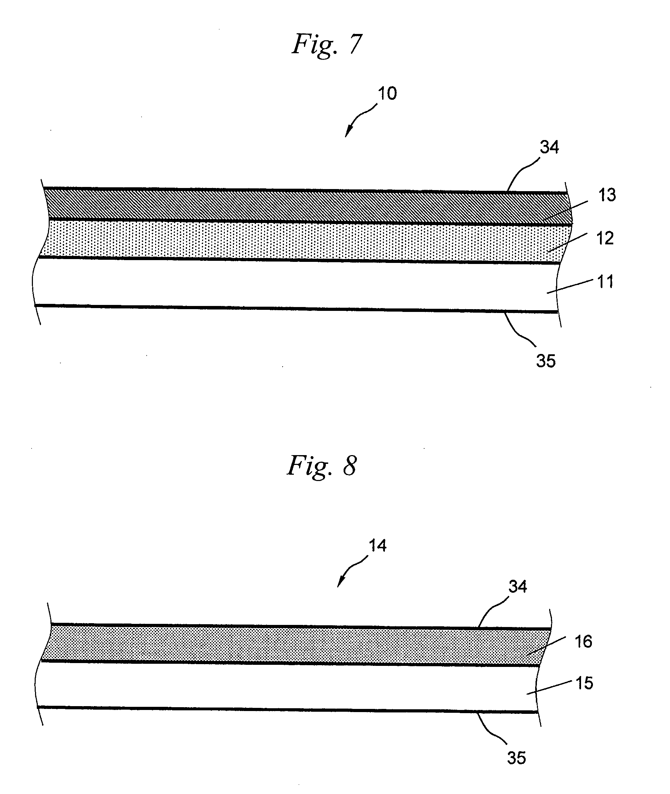

Fig. 7 and Fig. 8 each show an example of the configuration of the separation membrane of the above-mentioned embodiments i) and ii), respectively.
As shown in Fig. 7, the separation membrane 10 comprises a substrate 11, a separation membrane 13, and a porous supporting layer 12 arranged between the substrate 11 and the separation function layer 13.
As shown in Fig. 8, the separation membrane 14 comprises a substrate 15 and a separation function layer 16 laminated on the substrate 15. A porous supporting layer 12 is not arranged between the substrate 15 and the separation function layer 16. As described above, the same constitution as that of the porous supporting layer 12 may be applicable to the separation function layer 16. Also the same constitution as that of the substrate 11 is applicable to the substrate 15.
In the separation membrane, the surface on the side of the separation function layer is shown as the surface 34 on the feed side, while the surface on the substrate side is shown as the surface 35 on the permeate side. As described below, when a raw fluid is fed to the surface 34 on the feed side, then the raw fluid is separated into a permeated fluid that has passed through the separation membrane and has moved toward the side of the surface 35, and a concentrated fluid that has remained on the side of the surface 34 of the separation membrane.

<Separation Function Layer>

In the separation membrane of the above-mentioned embodiment i), for example, a crosslinked polymer is used for the separation function layer from the viewpoint of the pore size control and the durability. Specifically, preferred is a polyamide separation function layer formed through polycondensation of a polyfunctional amine and a polyfunctional acid halide or an organic/inorganic hybrid function layer or the like on a porous supporting layer to be mentioned below, from the viewpoint of the separation performance thereof.
The separation function layer in the separation membrane of the embodiment i) may contain a polyamide as the main ingredient thereof. The separation membrane is favorably used, for example, for obtaining drinkable water from seawater, brine water or also from water containing harmful materials or the like, as well as for producing ultrapure water for industrial use. Polyamide is, for example, a polycondensate of a polyfunctional amine and a polyfunctional acid halide.
In this description, "a composition X that contains a substance Y as the main ingredient thereof" includes a case where the content of the substance Y in the composition X is 50% by weight or more, a case where the content thereof is 60% by weight or more, a case where the content thereof is 80% by weight or more, and a case where the composition X substantially comprises only the substance Y. The term "composition" is a concept that includes a mixture, a composite and also a compound, etc.

The constitution of the polyamide, as well as the polyfunctional amine and the polyfunctional acid halide will be exemplified in the section of the production method given below. Further, the separation function layer that constitutes the separation membrane of the above i) may have an organic-inorganic hybrid structure with an Si element or the like, from the viewpoint of the chemical resistance thereof. The organic-inorganic hybrid-structured separation function layer is not specifically defined, for which, for example, employable is a silicon compound (A) with an ethylenic unsaturated group-having reactive group and a hydrolysable group directly bonding to the silicon atom therein, as well as a condensate of the hydrolysable group of the silicon compound (A) using any other ethylenic unsaturated group-having compound (B) than the above-mentioned silicon compound, and also as well as a polymer of the ethylenic unsaturated group of the silicon compound (A) and the ethylenic unsaturated group-having compound (B).

Specifically, the separation function layer may contain at least one polymer of the following:

a polymer formed through condensation and/or polymerization of the compound (A) alone;
a polymer formed through polymerization of the compound (B) alone; and
a copolymer of the compound (A) and the compound (B).
The polymer includes a condensate. In the copolymer of the compound (A) and the compound (B), the compound (A) may be condensed via the hydrolysable group therein.

In the separation function layer, the content of the compound (A) is preferably 10% by weight or more, more preferably from 20% by weight to 50% by weight. In the separation function layer, the content of the compound (B) is preferably 90% by weight or less, more preferably from 50% by weight to 80% by weight. The ratio by weight of compound (A)/compound (B) may be from 1/9 to 1/1. Within the range, the polycondensate contained in the separation function layer may secure a relatively high crosslinking degree and, therefore during filtration through the membrane, the separated components could be prevented from being released from the separation function layer and, as a result, the separation membrane can realize stable filtration performance.

The compound (A), the compound (B) and other compounds may form polymers (including condensates) and the like compounds. Accordingly, for example, when the "content of the compound (A) in the separation function layer" is discussed here, the compound (A) shall contain the amount of the components derived from the compound (A) in the polycondensate. The same shall apply also to the compound (B) and to the other compounds.

The separation function layer does not have any other ethylenic unsaturated group-having reactive group than the compound (A) therein, but may contain the components derived from a hydrolysable group-having silicon compound (C). Examples of the compound (C) of the type will be described hereinunder.

The compound (C) may be contained as a condensate of the compound (C) alone, or may be contained as a condensate with the polymer of the compound (A) and the compound (B).

Next described is the separation function layer to constitute the separation membrane of the above ii). The separation membrane of ii) is favorably used for drainage treatment.

Not specifically defined, the separation function layer in the separation membrane of ii) may be any one having separation function and mechanical strength, and may be formed, for example, from cellulose, polyethylene resin, polypropylene resin, polyvinyl chloride resin, polyvinylidene fluoride resin, polysulfone resin, polyether sulfone resin, polyimide resin, polyether imide resin, etc. The separation function layer may contain any of these resins as the main ingredient thereof.

In particular, as the main ingredient of the separation function layer, preferred is polyvinyl chloride resin, polyvinylidene fluoride resin, polysulfone resin, polyether sulfone resin or the like which enables easy film formation through solution casting and which is excellent in physical durability and chemical resistance.

As described below, the separation function layer may be formed, for example, by casting a solution of polysulfone in N,N-dimethylformamide (hereinafter this may be referred to as DMF) onto the substrate to be mentioned below, or that is, onto a nonwoven fabric in a predetermined thickness thereon followed by wet-coagulating in water.

In the separation membrane of the above ii), the average pore size in one surface of the porous resin layer (or that is, the separation function layer) may be two or more times the average pore size in the other surface thereof.

Of the separation function layer in any case, the thickness is not specifically defined. The separation membrane of the above i) is favorably employed, for example, for a reverse osmosis, forward osmosis or nanofiltration membrane. In such a case, the thickness of the separation function layer is preferably from 5 to 3000 nm from the viewpoint of the separation performance and the permeation performance, and is especially from 5 to 300 nm from the viewpoint of the permeation performance.

In the separation membrane of the above i), the thickness of the separation function layer may be measured according to an already-existing separation membrane thickness measuring method. For example, after embedded with resin, the separation membrane is cut into an ultrathin section, this is stained and then observed with a transmission electron microscope. In one typical measurement method where the separation function layer has a pleated structure, the layer thickness of one pleat is measured at intervals of 50 nm in the direction of the length of the cross section of the pleated structure positioned above the porous supporting layer, and 20 pleats are measured in the same manner, and the data are averaged.

On the other hand, in the case of the separation membrane of the embodiment of the above ii), the thickness of the separation function layer is preferably from 1 to 500 $\mu$m, more preferably from 5 to 200 $\mu$m. When the thickness of the separation function layer is 1 $\mu$m or more, then the separation function layer would hardly have defects such as cracks and could therefore maintain filtration performance. When the thickness of the separation function layer is 500 $\mu$m or less, then the layer could maintain good filtration performance.

<Porous Supporting Layer>

The porous supporting layer imparts mechanical strength to the separation membrane. The pore size and the pore distribution in the porous supporting layer are not specifically defined, and the porous supporting layer does not have to possess any separation function for components having a small molecular size such as ions and others. Specifically, the porous supporting layer may be any one that is generally referred to as a "porous supporting film" and, for example, includes a layer having uniform fine pores throughout the layer as well as a layer having fine pores of which the pore size may gradually increase from one surface of the layer on which the separation function layer is formed to the other surface thereof. Preferably, the pore size of the porous supporting layer for use herein is such that the diameter of the circle corresponding to the projected area of the pore, as measured on the surface of the porous supporting layer on which the separation function layer is formed by using an atomic force microscope or an electron microscope, is from 1 nm to 100 nm. Especially preferably, the porous supporting layer has a pore size of from 3 to 50 nm, in terms of the diameter of the circle corresponding to the projected area of each pore, from the viewpoint of the interfacial polymerization reactivity and the retentiveness of the separation function performance of the layer.

The thickness of the porous supporting layer is not specifically defined. From the viewpoint of the strength of the separation membrane, from the viewpoint of forming the height differences in the separation membrane and from the viewpoint of the configuration stability of the feed-side passages, the thickness is preferably within a range of from 20 to 500 $\mu$m, more preferably within a range of from 30 to 300 $\mu$m.

The configuration of the porous supporting layer may be identified through observation with a scanning electron microscope, a transmission electron microscope or an atomic force microscope. For example, the layer may be observed with a scanning electron microscope as follows: The porous supporting film is peeled from the substrate (nonwoven fabric), and then this is cut according to a freeze-fracture method to obtain a sample for cross section observation. The sample is coated with platinum or platinum-palladium or with ruthenium tetrachloride, preferably coated thinly with ruthenium tetrachloride, and observed with an ultrahigh-resolution field emission-type scanning electron microscope (UHR-FE-SEM) under an acceleration voltage of from 3 to 6 kV. As the ultrahigh-resolution field emission-type scanning electron microscope, herein usable is an electron microscope of Hitachi's S-900 Model. On the electron microscopic pictures thus taken, the thickness of the porous supporting layer and also the pore size, in terms of the diameter of the circle corresponding to the projected area of each pore, in the surface thereof are determined. Thus determined, the thickness and the pore size of the supporting layer are average values. The thickness of the supporting layer is an average value of the found data for 20 points taken at intervals of 20 $\mu$m in the direction perpendicular to the thickness direction of the layer in observation of the cross section of the layer. For pore size determination, 200 pores are measured for the diameter of the circle corresponding to the projected area of each pore, and all the found data are averaged to obtain the pore size.

The material of the porous supporting layer is preferably polysulfone, cellulose acetate, polyvinyl chloride, epoxy resin, or a mixture or a laminate of any of these. As the material having high chemical, mechanical and thermal stability and capable of facilitating pore size control, preferred is polysulfone.

As described above, a layer having the same constitution as the porous supporting layer described in this section may be provided on the support as a separation function layer. In this case, the pore size of the porous supporting layer shall be defined in accordance with the substances to be separated.

<Substrate>

Next, as the substrate, usable is a fibrous substrate of a nonwoven fabric from the viewpoint of giving suitable mechanical strength and controlling the height difference on the surface of the separation membrane while maintaining the separation performance and the permeation performance of the separation membrane.

As the nonwoven fabric, usable are those comprising polyolefin, polyester, cellulose or the like. Preferred are those comprising polyolefin or polyester from the viewpoint of forming the height differences in the separation membrane and from the viewpoint of configuration retentiveness. Also usable here are those comprising different types of materials as mixed.

As the substrate, preferably used is a long-fiber nonwoven fabric or a short-fiber nonwoven fabric. Preferably, the substrate satisfies the conditions that, when a polymer solution is cast on the substrate, the solution does not penetrate therethrough to run toward the back (permeate side) of the substrate, that the porous supporting layer hardly peels away from the substrate, and that the substrate hardly fluffs to cause separation layer unevenness and other defects of pinholes, etc. Accordingly, as the substrate, especially preferred is use of a long-fiber nonwoven fabric. The substrate may be a long-fiber nonwoven fabric of thermoplastic continuous filaments. In continuous production of the separation membrane, tension may be applied thereto in the machine direction, and therefore, it is desirable that a long-fiber nonwoven fabric excellent in dimensional stability is used as the substrate. Especially in the separation membrane of the above-mentioned embodiment i), preferred is a long-fiber nonwoven fabric from the viewpoint of both the strength and the cost, and more preferred is a polyester long-fiber nonwoven fabric from the viewpoint of the formability of the substrate.

In the long-fiber nonwoven fabric, preferably, the fibers in surface layer on the side opposite to the porous supporting layer are more longitudinally oriented than the fibers in the surface layer on the porous supporting layer side, from the viewpoint of the formability and the strength of the fabric. Having the configuration, the nonwoven fabric can more effectively secure the strength thereof and can be therefore prevented from being broken. Further, the configuration of the type enhances the formability of the laminate that includes the porous supporting layer and the substrate and the concavoconvex shapes of the separation membrane can be thereby stabilized. More specifically, the fiber orientation degree in the surface layer on the side opposite to the porous supporting layer of the long-fiber nonwoven fabric is preferably from 0° to 25°, and preferably, the fiber orientation degree difference between the surface layer on the side opposite to the porous supporting layer and the surface layer on the porous supporting layer side is from 10° to 90°.

The process of producing the separation membrane and the process of producing the separation membrane element include a heating step. When heated in this, the porous supporting layer or the separation function layer may shrink. Especially in the lateral direction in which no tension is given in continuous film production, the shrinkage is noticeable. The shrinkage may provide a problem of dimensional stability or the like, and therefore, the substrate is desired to have a small thermal dimensional change. In the nonwoven fabric, when the difference between the fiber orientation degree in the surface layer on the side opposite to the porous supporting layer and fiber orientation degree in the surface layer on the porous supporting layer side is from 10° to 90°, then the change in the lateral direction of the fabric by heat can be retarded, and therefore, the fabric of the type is preferred.

The fiber orientation degree as referred to herein is an index of indicating the direction of the fibers of the nonwoven fabric to constitute the porous supporting layer, and means the average angle of the fibers constituting the nonwoven fabric in a case where the machine direction in continuous film formation is referred to as 0° and the direction perpendicular to the machine direction, or that is, the lateral direction of the nonwoven fabric substrate is referred to as 90°. Accordingly, when the fiber orientation degree is nearer to 0°, then the fibers are in more longitudinal orientation; but when the degree is nearer to 90°, then the fibers are in more lateral orientation.

The fiber orientation degree is determined as follows: Ten small sample pieces are randomly sampled from the nonwoven fabric, and the surface of each piece is photographed at 100 to 1000-power with a scanning electron microscope. Ten fibers from each sample, therefore 100 fibers in total are analyzed in point of the angle thereof, based on the angle of the lengthwise direction (longitudinal direction, machine direction) of the nonwoven fabric referred to as 0° and on the angle of the cross direction (lateral direction) of the nonwoven fabric referred to as 90°. The found data are averaged. The average value is rounded from the first decimal place to the closest whole number to be the fiber orientation degree of the analyzed fabric.

The substrate, the porous supporting layer and the separation function layer to be contained in the separation membrane may contain any other additives such as colorant, antistatic agent and plasticizer than the above-mentioned components, in a ratio of 5% by weight or less, 2% by weight or less or 1% by weight or less.

<Concavoconvex Parts>

In this embodiment, a plurality of concavoconvex parts having a height difference of from 100 $\mu$m to 2000 $\mu$m are formed on at least one surface of the separation membrane. Of those 100 concavoconvex parts, the average value d1 of the minimum thickness and the average value d2 of the maximum thickness satisfy the following relational expression [1]:

$$0.8 \leq d1/d2 \leq 1.0 \qquad [1]$$

Satisfying the above-mentioned expression [1], the separation membrane realizes excellent separation performance and permeation performance. In case where the concavoconvex parts are formed on the feed side of the separation membrane and when these satisfy the above-mentioned expression [1], then the concavoconvex parts stably form the feed-side passages therein. A plurality of concavoconvex parts having a height difference of from 200 $\mu$m to 1500 $\mu$m, more preferably having a height difference of from 200 $\mu$m to 1000 $\mu$m, as formed therein, further enhance the separation performance and the permeation performance of the separation membrane; and when those concavoconvex parts are formed on the feed side of the membrane, then the stability of the feed-side passages can be further enhanced.

"Height differences are provided" and "concavoconvex parts are provided" are meant to include formation of grooves, recesses and/or projections and the like in the separation membrane. The size and the form of the grooves, the recesses and/or projections and others in the longitudinal cross section and in the transverse cross section are variable and are not defined to be specific configurations.

For example, the concavoconvex parts may be so configured that they can form feed-side passages or permeate-side passages. In other words, for forming the feed-side passages, it is good that continuous groove structures capable of efficiently feeding a raw fluid to nearly the entire area of the separation membrane are formed on the feed-side surface of the separation membrane. For forming permeate-side passages, it is good that continuous groove structures capable of collecting the permeate fluid in the water-collecting tube when the separation membrane is incorporated in an element are formed on the permeate-side surface of the separation membrane.

"Concavoconvex part" is meant to indicate the region between the tops of the adjacent two convex parts on one surface of the separation membrane in the cross section of the separation membrane. In other words, at least one cross section of the separation membrane includes at least three adjacent convex parts and concave parts provided between those convex parts in one surface of the separation membrane. For example, when the top face of the convex part is flat, the midpoint of the flat part in the cross section is considered as the above-mentioned "top".

In case where a network-like groove is provided on one side of the separation membrane, the number of the groove would be "1" in the planar view, but in the cross-sectional view thereof, there appear a plurality of concavoconvex parts. Also in a case where a network-like convex part is provided on one side of the separation membrane, the number of the convex part would be "1" in the planar view, but in the cross-sectional view thereof, there appear a plurality of convex parts. These configurations are within the scope of the structure where "a plurality of concavoconvex parts are provided".

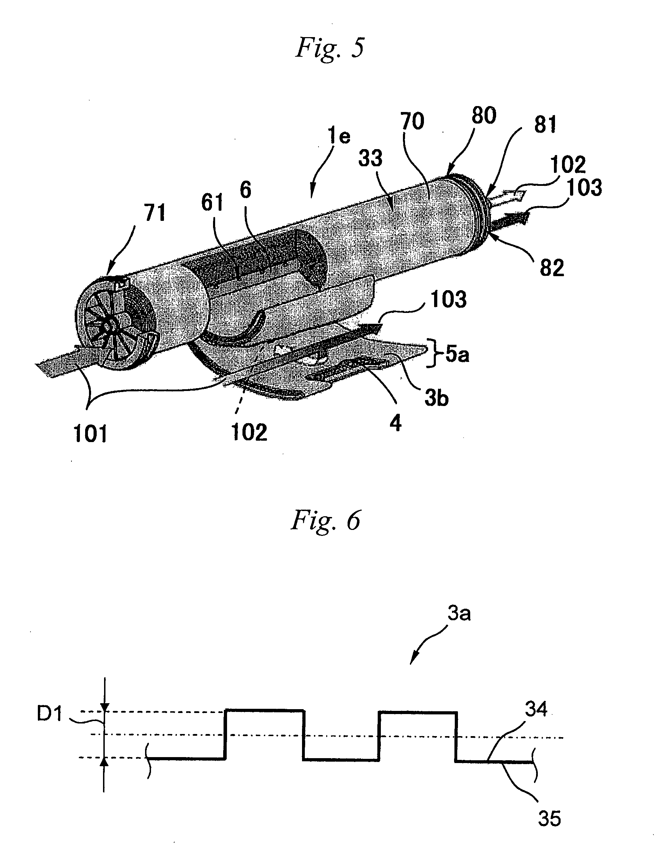

The height differences may be formed, for example, by the structure to provide concavoconvex shapes in the cross section, as in the separation membrane 3a in Fig. 6. In other words, the convex part of the feed-side face 34 of the separation membrane 3a corresponds to the concave part of the permeate-side face 35 thereof, and the concave part of the feed-side face 34 corresponds to the convex part of the permeate-side face 35. In the separation membrane 3a, the height difference in the feed-side face 34 is nearly the same as the height difference in the permeate-side face 35. Accordingly, in Fig. 6, both these height differences are jointly represented by D1.

All the separation membranes contained in one separation membrane element may have the above-mentioned height differences, or only a part of the separation membranes may have the above-mentioned height differences. The height differences may be provided on the entire surface of one separation membrane, or one separation membrane may include both a region where the height differences are not provided and a region where the height differences are provided.

The height differences of the separation membrane may be determined by the use of a commercially-available configuration analysis system. For example, using a laser microscope, the cross section of the separation membrane may be analyzed to measure the height differences therein; or using a high-precision configuration analysis system, Keyence's KS-1100, the surface of the separation membrane may be analyzed to measure the height differences therein. As sampled randomly, different sites having different height differences are analyzed, and the total heights are summed up and divided by the number of the analyzed sites to obtain the average value of the height differences. In the invention, the height difference may satisfy the above-mentioned range, as measured according to any of the measurement methods described here. A specific measurement method is described in the section of Examples given hereinunder.

Preferably, the pitch of the height differences in the separation membrane is from 0.1 mm to 30 mm, more preferably from 0.5 mm to 15 mm. The pitch means the horizontal distance from the highest point of one high part to the highest point of the other adjacent high part on at least one surface of the separation membrane having the height differences thereon.

The shape of the concavoconvex parts (that is, the shape of the concave parts or the convex parts) is not specifically defined; however, it is important to reduce the flow resistance in the passages and to stabilize the passages when a fluid is fed to the separation membrane element to run therethrough. From these viewpoints, the shape of the concave parts or the convex parts seen on the feed side may be oval, circular, oblong, trapezoidal, triangular, rectangular, square, parallelogram, rhombic or amorphous. Regarding the shape of the concave parts or the convex parts in the cross section vertical to the separation membrane, when the feed side is considered as an upper side and the permeate side is considered as a lower side, the parts may be formed to have a predetermined width from the upper side to the lower side, or may be formed to be broadened or narrowed from the upper side to the lower side.

The area of the convex parts on the feed side of the separation membrane is preferably from 5% to 80% relative to the area thereof seen from the top of the feed side (two-dimensional area), and is more preferably from 10% to 60% from the viewpoint of the flow resistance and the passage stability. The area of the convex parts is the projected area M1, as projected toward the plane parallel to the feed-side surface of the separation membrane, of the part higher than the centerline of the height difference on the feed-side surface of the separation membrane (for example, the dashed-dotted line in Fig. 6). In other words, it is desirable that the ratio of the area M1 to the projected area M2 of the surface of the separation membrane (M1/M2) falls within the above-mentioned range.

The separation membrane having the height differences formed on the permeate side thereof is favorable for a separation membrane element not having a permeate-side passage member therein. The separation membrane having the height differences formed on the feed side thereof is favorable for a separation membrane element not having a feed-side passage member therein. The separation membrane having the height differences formed on both sides thereof is favorable for a separation membrane element not having therein any of a permeate-side passage member or a feed-side passage member. Specifically, in the second embodiment of the separation membrane element to be described below, the separation membrane having the height differences formed on both sides thereof is favorable; in the fourth embodiment, the separation membrane having the height differences formed on the permeate-side thereof is favorable; and in the fifth embodiment, the separation membrane having the height differences formed on the feed side thereof is favorable.

When the average value d1 of the minimum thickness and the average value d2 of the maximum thickness in the concavoconvex parts fall within the range of the above-mentioned expression, then there can be realized high-performance and highly-efficient separation membrane and separation membrane element excellent in the performance of removing separated components and in the permeability performance and also excellent in chemical resistance to acids, alkalis and others to be used in washing the membrane.

The average value d1 of the minimum thickness and the average value d2 of the maximum thickness in the concavoconvex parts can be determined with a scanning electron microscope, a transmission electron microscope or an atomic force microscope, like the configuration of the porous supporting layer.

When the separation membrane is analyzed according to the method mentioned below, it is good that the analyzed sample satisfies the above-mentioned expression [1]. A sample of the separation membrane cut in a predetermined size is sliced according to a freeze-fracture method to give a sample for cross section observation. The sample is coated with platinum or platinum-palladium or with ruthenium tetrachloride, preferably coated thinly with ruthenium tetrachloride, and observed with an ultrahigh-resolution field emission-type scanning electron microscope (UHR-FE-SEM) under an acceleration voltage of from 3 to 6 kV. As the ultrahigh-resolution field emission-type scanning electron microscope, herein usable is an electron microscope of Hitachi's S-900 Model.

In one concavoconvex part having a height difference of 10 $\mu$m or more, the minimum thickness t1 and the maximum thickness t2 are measured. In different concavoconvex parts, the minimum thickness t1 and the maximum thickness t2 are measured similarly, and the sum total of the found data of the minimum thickness t1 and also the sum total of the found data of the maximum thickness t2 are computed. The sum total of the minimum thickness t1 is divided by the number of the measurement points to obtain the average value d1 of the minimum thickness; and the sum total of the maximum thickness t2 is divided by the number of the measurement points to obtain the average value d2 of the maximum thickness. Specifically, 100 concavoconvex parts are analyzed as above, and the average values may be computed.

Needless-to-say, to the separation membrane 3a of Fig. 6, the configuration of the separation membranes 10 and 14 of Fig. 7 and Fig. 8 is applicable.

The embodiments to be obtained by combining the constitution and the configuration described in different sections all fall within the technical scope of the present invention.

II. Production Method for Separation Membrane

<Formation of Porous Supporting layer in i), and Formation of Separation Function Layer in ii)>

The porous supporting layer in the separation membrane of the above i) and the separation function layer in the separation membrane of the above ii) can be formed according to the method described in "Office of Saline Water Research and Development Progress Report", No. 359 (1968), in which the polymer concentration, the solvent temperature and the poor solvent are controlled so as to obtain the above-mentioned configurations.

For example, a predetermined amount of polysulfone is dissolved in DMF to prepare a polysulfone resin solution having a predetermined concentration. Next, the polysulfone resin solution is applied onto a substrate of a nonwoven fabric nearly in a given thickness, then the solvent in the surface is removed in air for a given period of time, and thereafter the polysulfone is coagulated in a coagulant liquid to form the intended layer. In this step, in the surface part that is kept in contact with the coagulant liquid, the solvent DMF rapidly evaporates away and the polysulfone rapidly coagulates, thereby providing fine open cells each having grown from the part in which DMF has existed and which serves as a nucleus after DMF removal.

In the inside area from the surface part toward the substrate side, DMF evaporates away more slowly and polysulfone coagulates also more slowly than in the surface area, and therefore in the inside area, DMF tends to aggregate to form large nuclei, and consequently, the open cells to be formed may grow big. Needless-to-say, the nucleation condition may gradually change depending on the distance from the surface, and therefore a layer having a gentle pore size distribution with no definite boundary can be formed. By controlling the temperature of the polysulfone resin solution to be used in the formation step, and also by controlling the polysulfone concentration and the relative humidity in the atmosphere where the coating operation is attained, as well as the time to be taken after coating and before dipping in the coagulant liquid and the temperature and the composition of the coagulant liquid, there can be obtained a desired layer of which the average porosity and the average pore size are controlled in the intended manner.

The porous supporting layer and the separation function layer can be reworded as a porous resin layer or a cellular resin layer. Hereinafter a method for forming the separation function layer of the above ii) is mainly described; however, the formation method described below is applicable to the formation method for the porous resin layer of the above i).

The separation function layer is formed as follows: First, a coating film of a liquid concentrate that contains the above-mentioned resin and a solvent is first formed on the surface of a substrate (for example, nonwoven fabric), and the liquid concentrate is impregnated into the substrate. Subsequently, only the coating film-having side of the substrate having the coating film is kept in contact with a coagulation bath containing a non-solvent to coagulate the resin, thereby forming a porous resin layer as the separation function layer on the surface of the substrate. It is desirable that the temperature of the liquid concentrate is generally selected within a range of from 0 to 120°C from the viewpoint of the film formability thereof.

In this, a pore forming agent may be added to the liquid concentrate. The pore forming agent is extracted out during immersion in a coagulation bath, thereby making the resin layer porous. Preferably, the pore forming agent is highly soluble in the coagulant. For example, usable here are inorganic salts such as calcium chloride and calcium carbonate. Also usable are polyoxyalkylenes such as polyethylene glycol and polypropylene glycol; water-soluble polymers such as polyvinyl alcohol, polyvinyl butyral and polyacrylic acid; and glycerin.

The solvent dissolves resin. The solvent acts on the pore forming agent and promotes the formation of the porous resin layer. As the solvent, usable here are N-methylpyrrolidinone (NMP), N,N-dimethylacetamide (DMAc), N,N-dimethylformamide (DMF), dimethyl sulfoxide (DMSO), acetone, methyl ethyl ketone, etc. Above all, preferred are NMP, DMAc, DMF and DMSO of which the resin solubility is high.

In addition, a non-solvent may be added to the liquid concentrate. The non-solvent is a liquid that does not dissolve resin. The non-solvent controls the coagulation rate of resin to thereby control the size of the pores to be formed. As the non-solvent, usable here are water, and alcohols such as methanol and ethanol. Above all, water and methanol are preferred from the viewpoints of the easiness in drainage treatment and the cost. A mixture of these is also usable here.

In the liquid concentrate, preferably, the resin is within a range of from 5 to 40% by weight and the solvent is within a range of from 40 to 95% by weight. When the amount of the resin is too small, then the strength of the porous resin layer may lower; but when it is too large, then the water permeability of the membrane may lower. More preferably, the resin content is from 8 to 25% by weight. On the other hand, when the amount of the solvent is too small, then the liquid concentrate may readily gel; but when it is too large, then the strength of the porous resin layer may lower. More preferably, the solvent content is from 50 to 90% by weight.

In the coagulation bath in this case, preferably, the solvent content falls within a range of from 40 to 95% by weight and the non-solvent content is at least 5% by weight. When the solvent is smaller than 40% by weight, then the resin coagulation rate may be high and the pore size may be small. When the solvent is more than 95% by weight, then the resin could not coagulate and the porous resin layer is difficult to form. More preferably, the resin content is from 50 to 90% by weight. When the coagulation bath temperature is too high, then the coagulation rate may be rapid; but on the contrary, when too low, the coagulation rate may be slow. In general, therefore, it is desirable that the temperature falls within a range of from 0 to 100°C. More preferably, the temperature range is from 10 to 80°C.

The method of bringing only the coating film-side surface of the substrate having the coating film into contact with the coagulation bath is not specifically defined. For example, there may be mentioned a method where the substrate having the coating film is brought into contact the coagulation bath in such a manner that the coating film-side surface thereof could face the bath surface, or a method where a flat plate such as a glass plate, a metal plate or the like is stuck to the other side of the substrate opposite to the coating film side thereof in order that the coagulant could not step in the thus-masked surface of the substrate, and in that condition, the substrate having the coating film is immersed in the coagulation bath along with the plate stuck thereto. In the latter method, the coating film of the liquid concentrate may be formed on the substrate after the plate has been stuck to the substrate, or after the coating film of the liquid concentrate has been formed on the substrate, the plate may be stuck to the substrate.

The coating film of the liquid concentrate may be formed on the substrate by applying the liquid concentrate onto the substrate, or by immersing the substrate in the liquid concentrate. In case where the liquid concentrate is applied to the substrate, it may be applied onto one surface of the substrate, or may be onto both surfaces thereof. In this case, when a porous substrate (that is, a cellular substrate) having a density of 0.7 g/cm$^3$ or less is used, then the liquid concentrate could suitably penetrates into the porous substrate, though depending on the composition of the liquid concentrate.

Of the porous resin layer (that is, separation function layer) in the separation membrane thus produced in the manner as above, the average pore size in the surface that has been kept in contact with the coagulation bath is two or more times the average pore size in the other surface thereof. This is because, since the coagulation bath contain the solvent in an amount of from 40 to 95% by weight, the substitution rate between the liquid concentrate and the coagulation bath is relatively low and, as a result, in the porous resin layer, the pores in the surface that has been kept in contact with the coagulation bath grow rapidly to thereby increase the pore size; while on the other hand, the surface of the opposite side is not brought into contact with the coagulation bath, and therefore the pores are formed only through phase separation of the liquid concentrate so that the pore size is relatively small. Consequently, the separation membrane thus produced in the manner as above may be used in such a manner that the side thereof that was kept in contact with the coagulation bath could be the feed side while the other side thereof could be the permeate side.

According to the method mentioned below, in which a pore forming agent is added to the liquid concentrate, the separation function layer in the separation membrane of the above ii) can be formed.

Namely, as the above-mentioned liquid concentrate, a liquid concentrate that contains a resin, a pore forming agent and a solvent is used. A non-solvent may be added to the liquid concentrate.

The pore forming agent is extracted out during immersion in a coagulation bath, thereby making the resin layer porous. Preferably, the pore forming agent is highly soluble in the coagulant. For example, usable here are inorganic salts such as calcium chloride and calcium carbonate. Also usable are polyoxyalkylenes such as polyethylene glycol and polypropylene glycol; water-soluble polymers such as polyvinyl alcohol, polyvinyl butyral and polyacrylic acid; and glycerin.

As the solvent and the non-solvent, the same as those mentioned above are usable.

In the liquid concentrate, preferably, the resin is within a range of from 5 to 40% by weight, the pore forming agent is within a range of from 0.1 to 15% by weight, the solvent is within a range of from 40 to 94.9% by weight, and the non-solvent is within a range of from 0 to 20% by weight. When the amount of the resin is too small, then the strength of the porous resin layer may lower; but when too large, then the water permeability of the membrane may lower. More preferably, the resin content in the liquid concentrate is from 8 to 25% by weight. On the other hand, when the amount of the pore forming agent is too small, then the water permeability of the membrane may lower; but when it is too large, the strength of the porous resin layer may lower. Further, when the amount is extremely too large, then the agent may remain in the porous resin and may dissolve out during use, whereby the quality of the permeate may worsen and the water permeability of the membrane may fluctuate. More preferably, the content of the pore forming agent in the liquid concentration is from 0.5 to 10% by weight. When the amount of the solvent is too small, then the liquid concentrate may readily gel; but when it is too large, then the strength of the porous resin layer may lower. In case where the non-solvent is not used, the solvent content in the liquid concentrate is more preferably within a range of from 55 to 94.9% by weight, even more preferably within a range of from 60 to 90% by weight. When the amount of the non-solvent is too large, then the liquid concentrate may gel; but when it is too small, then the pore size would be difficult to control. More preferably, the content of the non-solvent in the liquid concentrate is within a range of from 0.5 to 15% by weight.

The coagulation bath may contain a non-solvent, or a mixture of a non-solvent and a solvent. In the coagulation bath, the content of the non-solvent is at least 80% by weight when the liquid concentrate contains the non-solvent. When the content of the non-solvent is too small, then the resin coagulation rate may be low and the pore size may increase. More preferably, the content is within a range of from 85 to 100% by weight. In case where the liquid concentrate does not contain the non-solvent, then the content of the non-solvent in the coagulation bath is preferably at least 60% by weight. When the content of the non-solvent is too large, then the resin coagulation rate may be high so that the surface of the porous resin layer could be dense, but fine cracks may be formed in the surface of the porous resin layer. More preferably, the content falls within a range of from 60 to 99% by weight. When the coagulation bath temperature is too high, then the coagulation rate may be high; but on the contrary, when the temperature is too low, then the coagulation rate may lower. In general, therefore, it is desirable that the temperature is within a range of from 15 to 80°C, more preferably within a range of from 20 to 60°C.

The method of forming the coating film of the liquid concentrate on the substrate, the method of bringing the coating film with the coagulation bath and the density of the substrate to be used are the same as those in the case where the pore forming agent is not used.

The separation membrane produced in the manner as above is so configured that, on the surface thereof coated with the coating film of the liquid concentrate formed thereon, the porous resin layer (that is, the separation function layer in the separation membrane of ii)) is exposed out while on the other surface thereof, the porous substrate (for example, nonwoven fabric) is exposed out. In the porous resin layer, the average pore size in the surface coated with the coating liquid of the liquid concentrate formed thereon is 1/2 or less of the average pore size in the other surface. This is because the surface coated with the coating film of the liquid concentrate formed thereon is rapidly brought into contact with the coagulation bath, as compared with the other surface, and therefore the substitution rate between the liquid concentrate and the coagulation bath is high and, as a result, in the substrate having the coating film, the pore size is kept small. Consequently, the separation membrane thus produced in the manner as above may be used in such a manner that the side thereof coated with the coating film of the liquid concentrate formed thereon could be the permeate side while the other side thereof could be the feed side (that is, the side to which the liquid to be treated is applied).

<Formation of Separation Function Layer in i)>

The separation function layer to constitute the separation membrane of the above i) can be formed as follows.
The separation function layer comprising polyamide as the main ingredient thereof may be formed through interfacial polycondensation of a polyfunctional amine and a polyfunctional acid halide on the porous supporting layer. In this, preferably, at least one of a trifunctional or more multifunctional compound is used as at least one of the polyfunctional amine or the polyfunctional acid halide.
The polyfunctional amine is an amine having at least two primary amino groups and/or secondary amino groups in one molecule, in which at least one amino group is a primary amino group.
For example, there are mentioned aromatic polyfunctional amines in which two amino groups bond to the benzene ring in any positional relation of an ortho-position, meta-position or para-position, such as phenylenediamine, xylylenediamine, 1,3,5-triaminobenzene, 1,2,4-triaminobenzene, 3,5-diaminobenzoic acid, 3-aminobenzylamine, 4-aminobenzylamine, etc.; aliphatic amines such as ethylenediamine, propylenediamine, etc.; alicyclic polyfunctional amines such as 1,2-diaminocyclohexane, 1,4-diaminocyclohexane, 4-aminopiperidine, 4-aminoethylpiperazine, etc.
In consideration of the selective separability, permeability and heat resistance of the membrane, the polyfunctional amine is preferably an aromatic polyfunctional amine having from 2 to 4 primary amino groups and/or secondary amino groups in one molecule. As the polyfunctional aromatic amine of the type, preferably used here is m-phenylenediamine, p-phenylenediamine or 1,3,5-triaminobenzene. Above all, more preferred is m-phenylenediamine (hereinafter referred to as m-PDA) from the viewpoint of the availability and the handleability thereof.
These polyfunctional amines may be used alone or in combination of two or more kinds thereof. In case where two or more different types of polyfunctional amines are used, the above-mentioned amines may be used as combined together, or the above-mentioned amine may be combined with any other amine having at least two secondary amino group in one molecule. As the amine having at least two secondary amino groups in one molecule, for example, there may be mentioned piperazine, 1,3-bispiperidylpropane, etc.
The polyfunctional acid halide is an acid halide having at least two halogenocarbonyl groups in one molecule.
For example, as trifunctional acid halides, there are mentioned trimesic acid chloride, 1,3,5-cyclohexanetricarboxylic acid trichloride, 1,2,4-cyclobutanetricarboxylic acid trichloride, etc. As bifunctional acid halides, there are mentioned aromatic bifunctional acid halides such as biphenyldicarboxylic acid dichloride, azobenzenedicarboxylic acid dichloride, terephthalic acid chloride, isophthalic acid chloride, naphthalenedicarboxylic acid chloride, etc.; aliphatic bifunctional acid halides such as adipoyl chloride, sebacoyl chloride, etc.; alicyclic bifunctional acid halides such as cyclopentanedicarboxylic acid dichloride, cyclohexanedicarboxylic acid dichloride, tetrahydrofurandicarboxylic acid dichloride, etc.
In consideration of the reactivity thereof with a polyfunctional amine, the polyfunctional acid halide is preferably a polyfunctional acid chloride. In consideration of the selective separability and the heat resistance of the membrane, preferably, the polyfunctional acid halide is a polyfunctional aromatic acid chloride having from 2 to 4 chlorocarbonyl groups in one molecule. In particular, more preferred is trimesic acid chloride from the viewpoint of the availability and the handleability thereof.
These polyfunctional acid halides may be used alone or in combination of two or more kinds thereof simultaneously.
As the polyfunctional acid halide, usable here are both a bifunctional acid halide and a trifunctional halide compound. From the viewpoint of maintaining the separation performance of the separation membrane, preferably, the ratio of the bifunctional acid halide to the trifunctional halide compound is from 0.05 to 1.5 in terms of the ratio by mol of (mol of bifunctional acid halide/mol of trifunctional acid halide), more preferably from 0.1 to 1.0.
A specific method for forming a polyamide layer as the separation function layer is described below.
An aqueous solution of a polyfunctional amine is applied onto a porous supporting film, and then the excessive aqueous amine solution is removed with an air knife or the like. A polyfunctional acid halide-containing solution is applied onto it, and the excessive polyfunctional acid halide is removed with an air knife or the like.
Subsequently, the monomer may be removed by washing. If desired, the coated film may be subjected to chemical treatment with chlorine, acid, alkali, nitrous acid or the like. After the chemical treatment, the coated film may be washed, or after washed, the film may be processed for chemical treatment.

An organic solvent may be used for the polyfunctional acid halide-containing solution. The organic solvent is preferably one immiscible with water but capable of dissolving a polyfunctional acid halide with no damage to porous resin. The organic solvent may be any one inert to a polyfunctional amine compound and to a polyfunctional acid halide. Preferred examples of the solvent include hydrocarbon compounds such as n-hexane, n-octane and n-decane.

Formation of the separation function layer having an organic-inorganic hybrid structure with an Si element and the like is described. As mentioned above, the separation function layer having an organic-inorganic hybrid structure may be formed through at least one reaction of condensation of the compound (A) or polymerization of the compound (A) and the compound (B).

First described is the compound (A).

The ethylenic unsaturated group-having reactive group directly bonds to the silicon atom. The reactive group of the type includes a vinyl group, an allyl group, a methacryloxymethyl group, a methacryloxypropyl group, an acryloxyethyl group, an acryloxypropyl group, a styryl group. From the viewpoint of the polymerizability thereof, preferred are a methacryloxypropyl group, an acryloxypropyl group and a styryl group.

Via the process where the hydrolysable group directly bonding to the silicon atom changes to a hydroxyl group, the compound (A) gives a polymer through condensation of bonding the silicon compounds to each other via a siloxane bond.

The hydrolysable group includes functional groups such as an alkoxy group, an alkenyloxy group, a carboxyl group, a ketoxime group, an aminohydroxy group, a halogen atom and an isocyanate group. The alkoxy group is preferably one having from 1 to 10 carbon atoms, more preferably having 1 or 2 carbon atoms. The alkenyloxy group is preferably one having from 2 to 10 carbon atoms, more preferably from 2 to 4 carbon atoms, and even more preferably having 3 carbon atoms. The carboxyl group is preferably one having from 2 to 10 carbon atoms, more preferably one having two carbon atoms, or that is, an acetoxyl group. Examples of the ketoxime group include a methylethylketoxime group, a dimethylketoxime group and a diethylketoxime group. The aminohydroxy group is such that the amino group bonds to the silicon atom via the oxygen atom. The group of the type includes a dimethylaminohydroxy group, diethylaminohydroxy group and a methylehtylaminohydroxyl group. As the halogen atom, preferably used is a chlorine atom.

In forming the separation function layer, also usable is a silicon compound in which the above-mentioned hydrolysable group has hydrolyzed to give a silanol structure. Also usable is a polymer of two or more silicon compounds, in which a part of the hydrolysable group has hydrolyzed, condensed and polymerized to such a degree that the resulting polymer does not form a crosslinked structure.

As the silicon compound (A), preferred are those represented by the following formula (a):

$$Si(R^1)_m(R^2)_n(R^3)_{4-m-n} \qquad (a)$$

($R^1$ represents a reactive group containing an ethylenic unsaturated group. $R^2$ represents any of an alkoxy group, an alkenyloxy group, a carboxy group, a ketoxime group, a halogen atom or an isocyanate group. $R^3$ represents H or an alkyl group. m and n each are an integer satisfying $m + n \leq 4$, and satisfying $m \geq 1$ and $n \geq 1$. In $R^1$, $R^2$ and $R^3$, when two or more functional groups bond to the silicon atom, they may be the same or different.)

$R^1$ is a reactive group containing an ethylenic unsaturated group, and is as described above.

$R^2$ is a hydrolysable group, and is as described above. The carbon number of the alkyl group to be $R^3$ is preferably from 1 to 10, more preferably 1 or 2.

The hydrolysable group is preferably an alkoxy group since the reaction liquid can be viscous in forming the separation function layer.

Examples of the silicon compound include vinyltrimethoxysilane, vinyltriethoxysilane, styryltrimethoxysilane, methacryloxypropylmethyldimethoxysilane, methacryloxypropyltrimethoxysilane, methacryloxypropylmethyldiethoxysilane, methacryloxypropyltriethoxysilane and acryloxypropyltrimethoxysilane.

In addition to the compound (A), also usable as combined is a silicon compound (C) not having a reactive group with an ethylenic unsaturated group but having a hydrolysable group. For the compound (A), "$m \geq 1$" in the general formula (a); but for the compound (C), m is zero in the general formula (a). Examples of the compound (C) include tetramethoxysilane, tetramethoxysilane, methyltrimethoxysilane and methyltriethoxysilane.

Next described is the compound (B) having an ethylenic unsaturated group, except the compound (A).

The ethylenic unsaturated group has the ability of addition polymerization. Examples of such a compound include ethylene, propylene, methacrylic acid, acrylic acid, styrene and their derivatives.

Preferably, the compound is an alkali-soluble compound having an acid group so as to increase the selective permeability for water of the separation membrane and to increase the salt blocking ratio thereof when the separation membrane is used for separation of aqueous solutions.

Preferred structures of the acid include a carboxylic acid, a phosphonic acid, a phosphoric acid and a sulfonic acid; and regarding the structures of those acids, the acid may exist in any state of a free acid, an ester compound or a metal salt. The compound having at least one ethylenic unsaturated group may contain two or more acids, but especially preferred is a compound having one or two acid groups.

Of the above-mentioned compounds having at least one ethylenic unsaturated group, those having a carboxylic acid group include maleic acid, maleic anhydride, acrylic acid, methacrylic acid, 2-(hydroxymethyl)acrylic acid, 4-(meth)acryloyloxyethyltrimellitic acid and its corresponding anhydride, 10-methacryloyloxydecylmalonic acid, N-(2-hydroxy-3-methacryloyloxypropyl)-N-phenylglycine and 4-vinylbenzoic acid.

Of the above-mentioned compounds having at least one ethylenic unsaturated group, examples of those having a phosphonic acid group include vinylphosphonic acid, 4-vinylphenylphosphonic acid, 4-vinylbenzylphosphonic acid, 2-methacryloyloxyethylphosphonic acid, 2-methacrylamidoethylphosphonic acid, 4-methacrylamide-4-methylphenylphosphonic acid, 2-[4-(dihydroxyphosphoryl)-2-oxabutyl]acrylic acid and 2,4,6-trimethylphenyl 2-[2-dihydroxyphosphoryl)ethoxymethyl]acrylate.

Of the above-mentioned compounds having at least one ethylenic unsaturated group, examples of phosphate ester compounds include 2-methacryloyloxypropyl monohydrogenphosphate and 2-methacryloyloxypropyl dihydrogenphosphate, 2-methacryloyloxyethyl monohydrogenphosphate and 2-methacryloyloxyethyl dihydrogenphosphate, 2-methacryloyloxyethylphenyl monohydrogenphosphate, dipentaerythritol pentamethacryloyloxyphosphate, 10-methacryloyloxydecyl dihydrogenphosphate, dipentaerythritol pentamethacryloyloxyphosphate, mono(1-acryloyl-piperidin-4-yl)phosphate, 6-(methacrylamide)hexyl dihydrogenphosphate as well as 1,3-bis(N-acryloyl-N-propylamino)propan-2-yl dihydrogenphosphate.

Of the above-mentioned compounds having at least one ethylenic unsaturated group, examples of those having a sulfonic acid group include vinylsulfonic acid, 4-vinylphenylsulfonic acid or 3-(methacrylamide)propylsulfonic acid.

In forming the separation function layer having an organic-inorganic hybrid structure, a reaction liquid containing the compound (A), the compound (B) and a polymerization initiator is used. The reaction liquid is applied onto the porous supporting layer, and the hydrolysable group is condensed and the ethylenic unsaturated group is polymerized thereon, whereby the compounds are converted into a polymer.

In case where the compound (A) is condensed alone, the crosslinking chain bonding centers at the silicon atom, and therefore the density difference between the part around the silicon atom and the part spaced from the silicon atom would increase. As a result, the pore size in the separation function layer tends to be uneven. On the other hand, when the compound (B) and the compound (A) are copolymerized in addition to the polymerization and the crosslinking of the compound (A) itself, the crosslinking point derived from the condensation of the hydrolysable group and the crosslinking point derived from the polymerization of the ethylenic unsaturated group could be suitably dispersed. When the crosslinking points are dispersed in that manner, then the pore size in the separation membrane could be uniform. As a result, a good balance of permeation and removal through the separation membrane can be realized. The low-molecular compound having at least one ethylenic unsaturated group may dissolve out during use and may worsen the separation membrane; however, since the compound is converted into a polymer having a high molecular weight in the separation function layer, the separation membrane can be prevented from being worsened by the compound.

In the production method, preferably, the content of the compound (A) is 10 parts by weight or more relative to 100 parts by weight of the solid content in the reaction liquid, more preferably from 20 parts by weight to 50 parts by weight. The solid content in the reaction liquid includes, of all the components contained in the reaction liquid, the components to be finally contained as the separation function layer in the obtained composite semipermeable membrane, except for the solvent and other volatile components such as water, alcohol and the like formed in condensation. When the amount of the compound (A) is enough, a sufficient crosslinking degree can be obtained and the risk of dissolution of the components of the separation function layer during filtration through the membrane to worsen the separation performance of the membrane can be reduced.

Preferably, the content of the compound (B) is 90 parts by weight or less relative to 100 parts by weight of the solid content contained in the reaction liquid, more preferably from 50 parts by weight to 80 parts by weight. When the content of the compound (B) falls within the range, the crosslinking degree of the obtained separation function layer could be high, and the membrane secures stable filtration therethrough with no risk of dissolution of the separation function layer.

Next described is a method of forming the separation function layer having an organic-inorganic hybrid structure as mentioned above, on a porous supporting layer.

One example of the method for forming the separation function layer comprises a step of applying a reaction liquid containing the compound (A) and the compound (B) onto a substrate, a step of removing the solvent, a step of polymerizing the ethylenic unsaturated group and a step of condensing the hydrolysable group that are to be carried out in that order. During the step of polymerizing the ethylenic unsaturated group, the hydrolysable group may be condensed at the same time.

First, a reaction liquid containing the compound (A) and the compound (B) is brought into contact with the porous supporting layer to be mentioned below. The reaction liquid is generally a solution containing a solvent. Not specifically defined, the solvent may be any one capable of dissolving the compound (A), the compound (B) and an optional component, polymerization initiator, not damaging the porous supporting layer. Water may be added to the reaction liquid in an amount of from 1 to 10 molar times the molar number of the compound (A), preferably from 1 to 5 molar times, along with an inorganic acid or an organic acid added thereto to thereby promote the hydrolysis of the compound (A).

The solvent of the reaction liquid is preferably water, an alcohol-type organic solvent, an ether-type organic solvent, a ketone-type organic solvent or their mixture. For example, as the alcohol-type solvent, there are mentioned methanol, ethoxymethanol, ethanol, propanol, butanol, amyl alcohol, cyclohexanol, methylcyclohexanol, ethylene glycol monomethyl ether (2-methoxyethanol), ethylene glycol monoaceto ester, diethylene glycol monomethyl ether, diethylene glycol monoacetate, propylene glycol monoethyl ether, propylene glycol monoacetate, dipropylene glycol monoethyl ether, methoxybutanol, etc. As the ether-type organic solvent, there are mentioned methylal, diethyl ether, dipropyl ether, dibutyl ether, diamyl ether, dimethylacetal, dihexyl ether, trioxane, dioxane, etc. As the ketone-type organic solvent, there are mentioned acetone, methyl ethyl ketone, methyl propyl ketone, methyl isobutyl ketone, methyl amyl ketone, methyl cyclohexyl ketone, diethyl ketone, ethyl butyl ketone, trimethylnonanone, acetonitrileacetone, dimethyl oxide, phorone, cyclohexanone, diacetone alcohol, etc.

The amount of the solvent to be added to the reaction liquid is preferably from 50 to 99% by weight, more preferably from 80 to 99% by weight. When the amount of the solvent is 99% by weight or less, then the advantage is that there hardly occur defects in the membrane; and when the amount is 50% by weight or more, a separation membrane having high water permeability can be obtained.

Preferably, the porous supporting layer and the reaction liquid are kept in contact with each other by uniformly and continuously applying the reaction liquid onto the porous supporting layer. Specifically, for example, there is mentioned a method where the reaction liquid is applied onto the porous supporting layer by using a coating apparatus such as a spin coater, a wire war, a flow coater, a die coater, a roll coater, a spray, etc. Also mentioned is a method of immersing the porous supporting layer in the reaction liquid.

In the case of immersion, the contact time between the porous supporting layer and the reaction liquid is preferably within a range of from 0.5 to 10 minutes, more preferably within a range of from 1 to 3 minutes. After the reaction liquid has been brought into contact with the porous supporting layer, preferably, the porous supporting layer is processed for complete liquid removal therefrom so that no liquid drop may remain on the layer. Sufficient liquid removal prevents surface defects to be caused by some liquid drops remaining on the surface, thereby preventing the membrane performance from worsening. For liquid removal, there may be employed a method where the porous supporting layer after kept in contact with the reaction liquid is hung vertically to thereby make the excessive reaction liquid spontaneously drop down, or a method of spraying a nitrogen flow or the like onto the layer via an air nozzle to thereby forcedly remove the excessive liquid (that is, air-knife method). After the liquid removal, the membrane surface may be dried to further remove a part of the solvent in the reaction liquid.

The step of condensing the hydrolysable group of the silicon is carried out through heat treatment after bringing the reaction liquid into contact with the porous supporting layer. The heating temperature in this case is required to be lower than the temperature at which the porous supporting layer is melted to decrease the performance thereof as a separation membrane. In order to progress the condensation reaction rapidly, the heating is preferably carried out typically at 0°C or higher, and more preferably at 20°C or higher. In addition, the reaction temperature mentioned above is preferably 150°C or lower, and more preferably 100°C or lower. A reaction temperature of 0°C or higher progresses the hydrolysis and the condensation reaction rapidly, whereas a reaction temperature of 150°C or lower makes it easier to control the hydrolysis and the condensation reaction. In addition, the addition of a catalyst for promoting the hydrolysis or the condensation allows the reaction to be progressed at lower temperatures. Furthermore, in the invention, the heating condition and the humidity condition are selected to provide the separation function layer with pores, in such a way that the condensation reaction can be carried out appropriately.

As the method for the polymerization of the ethylenic unsaturated group of the compound having an ethylenic unsaturated group, the compound (A) and the compound (B), the polymerization can be carried out by heat treatment, electromagnetic wave irradiation, electron beam irradiation, or plasma irradiation. The electromagnetic wave herein includes infrared rays, ultraviolet rays, X rays, and y rays. While an optimum selection of the polymerization method may be made appropriately, polymerization by electromagnetic wave irradiation is preferable in terms of the running cost, the productivity, etc. Polymerization by infrared ray irradiation or ultraviolet ray irradiation is more preferable among the electromagnetic waves in terms of convenience. In the case of actually carrying out polymerization with the use of infrared rays or ultraviolet rays, these light sources do not have to selectively generate only light rays in these wavelength ranges, and it is enough for the light sources to generate light rays including electromagnetic rays in these wavelength ranges. However, the strength of these electromagnetic waves is preferably higher as compared with electromagnetic waves in other wavelength ranges, in terms of the ability to reduce the polymerization time and control the polymerization conditions.

The electromagnetic waves can be generated from a halogen lamp, a xenon lamp, a UV lamp, an excimer lamp, a metal halide lamp, a rare gas fluorescent lamp, a mercury lamp, etc. While the energy of the electromagnetic waves is not particularly limited as long as polymerization can be carried out, above all, short-wavelength ultraviolet rays with a high degree of efficiency have high thin film forming properties. Such ultraviolet rays can be generated by low pressure mercury lamps and excimer laser lamps. The thickness and the configuration of the separation function layer may vary significantly depending also on the respective polymerization conditions, and may vary significantly depending on the wavelength and the intensity of the electromagnetic waves, the distance to the object to be irradiated, and the processing time, in the case of polymerization with electromagnetic waves. Therefore, these conductions need to be appropriately optimized.

It is preferable to add a polymerization initiator, a polymerization promoter, etc., in the formation of the separation function layer for the purpose of increasing the polymerization rate. The polymerization initiator and the polymerization promoter herein are not particularly limited, and are appropriately selected according to the structures of the compounds used, the polymerization approach, etc.

Examples of the polymerization initiator are given below. Examples of the initiator for the polymerization with electromagnetic waves include benzoin ether, dialkyl benzil ketal, dialkoxyacetophenone, acylphosphine oxide or bisacylphosphine oxide, α-diketones (for example, 9,10-phenanthrene quinone), diacetyl quinone, furylquinone, anisylquinone, 4,4'-dichlorobenzylquinone and 4,4'-dialkoxybenzylquinone, and camphor quinone. Examples of the initiator for the polymerization with heat include azo compounds (for example, 2,2'-azobis(isobutyronitrile) (AIBN) or azobis-(4-cyanovalerianic acid)), or peroxides (for example, dibenzoyl peroxide, dilauroyl peroxide, tert-butyl octaneperoxoate, tert-butyl perbenzoate, or di-(tert-butyl)peroxide), further aromatic diazonium salts, bis-sulfonium salts, aromatic iodonium salts, aromatic sulfonium salts, potassium persulfate, ammonium persulfate, alkyl lithium, cumyl potassium, sodium naphthalene, and distyryl dianion. Above all, benzopinacol and 2,2'-dialkylbenzopinacol are particularly preferable as initiators for radical polymerization.

The peroxides and α-diketones are preferably used in combination with an aromatic amine in order to accelerate the initiation. These combinations are also referred to as redox series. An example of these series is a combination of benzoyl peroxide or camphor quinine with an amine (for example, N,N-dimethyl-p-toluidine, N,N-dihydroxyethyl-p-toluidine, ethyl p-dimethylaminobenzoate, or their derivatives). Furthermore, another series are also preferable which contain a peroxide in combination with ascorbic acid, barbiturate, or sulfinic acid as a reducing agent.

Then, heat treatment at about 100 to 200°C produces a condensation reaction, thereby forming a silane coupling agent-derived separation function layer on the surface of the porous supporting layer. While the heating temperature depends on the material of the porous supporting layer, too high a heating temperature causes dissolution to block pores of the porous supporting layer, thus decreasing the water desalination amount to be finally achieved by the separation membrane. On the other hand, too low a heating temperature produces an insufficient condensation reaction to dissolve the separation function layer, thereby decreasing the removal ratio.

In the above-mentioned production method, the step of polymerizing the compound having at least one ethylenic unsaturated compound with a silane coupling agent may be carried out before or after or during the polycondensation step with the silane coupling agent.

The separation membrane having an organic-inorganic hybrid structure thus obtained in the manner as above can be used directly as it is, but before use, it is desirable that the surface of the membrane is hydrophilized, for example, with an alcohol-containing aqueous solution or an alkaline aqueous solution.

In any of the separation membranes of the above i) and ii), the separation function layer may be processed for chemical treatment with a chlorine-containing compound, nitrous acid, a coupling agent or the like for the purpose of enhancing the basic performance such as the permeation performance and the removal performance thereof.

<Formation of Concavoconvex Parts>

A forming component is arranged on one surface of a work-in-process separation membrane and, while the forming component is thus kept arranged thereon, the work-in-process separation membrane is pressed from the other surface thereof by a liquid or vapor applied thereto, thereby forming height differences on the surface of the separation membrane.

Forming by a fluid such as a liquid or vapor provides uniform concavoconvex parts in accordance with the shape of the forming component used, and therefore it is possible to obtain a separation membrane in which the average value d1 of the minimum thickness and the average value d2 of the maximum thickness in the concavoconvex parts satisfy the above-mentioned relational expression [1].

The temperature of the liquid or the vapor during forming is specifically from 50°C to 100°C. Forming by the liquid or vapor at a temperature of from 50°C to 100°C enhances the formability of the separation function layer, the porous supporting layer and the substrate. As a result, not only the structure of the separation membrane can be prevented from being broken during forming but also the retentiveness of the shape of the concavoconvex parts can be enhanced. The heat treatment temperature during forming can be identified according to a known method of measuring the heat treatment temperature of polyester fibers by peeling the separation membrane alone from the substrate followed by measuring DSC of the substrate.

The pressure during forming is not specifically defined so far as a plurality of convex parts having height differences of from 100 $\mu$m to 2000 $\mu$m can be formed on at least one surface of the separation membrane; however, the pressure is preferably from 0.5 to 5 MPa for forming stable passages not worsening the membrane performance.

The height differences, the pitch and the shape of the forming component and the concave area on the feed side are reflected on the height differences, the pitch and the shape of the above-mentioned separation membrane and also on the concave area on the feed side, and consequently, these are suitably selected in accordance with the shape of the intended concavoconvex parts.

The material of the forming component is not specifically defined so far as it has a sufficient strength resistant to the pressure forming of the separation membrane; however, in view of the handleability and the workability, preferred are thermoplastic resin, thermosetting resin and metal. The forming component may also function as the feed-side passage member or the permeate-side passage member.

The "work-in-process separation membrane" may be a membrane provided with all the constituents of the separation membrane other than concavoconvex parts, or may be a membrane not provided with a part of the constituents. In other words, the work-in-process includes a substrate, a porous supporting film (a film to be a porous supporting layer after laminated with a substrate or the like), a separation function film (a film to be a separation function layer after laminated with a substrate or the like), a laminate of a substrate and a porous supporting layer, a laminate of a substrate and a separation function layer, a laminate of a substrate, a porous supporting layer and a separation function layer, etc. The work-in-process includes half-finished products.

In other words, the step of forming concavoconvex parts in the separation membrane may be attained in any stage of separation membrane production. Specifically, examples of the step of forming concavoconvex parts in the separation membrane include, for example, a step of processing the porous supporting layer for formation of concavoconvex parts therein before forming the separation function layer; a step of processing the substrate alone for forming concavoconvex parts therein; a step of laminating the porous supporting layer and the substrate followed by processing the resulting laminate for forming concavoconvex parts therein; and a step of processing the separation membrane already having the separation function layer formed, for forming concavoconvex parts therein. An element produced by changing the permeate passage member with the forming component may be processed for applying water under pressure thereto, thereby forming concavoconvex parts in the element.

One specific method is described. A continuous sheet is cut into a suitable size, a polypropylene-made net (height 800 microns, pitch 5 mm) is arranged as the forming component on the back side of the separation membrane, and hot water at 80°C is applied to the surface of the separation membrane under a pressure of 1.0 MPa for 5 minutes, thereby forming concavoconvex parts in the separation membrane.

As the pressure transmission medium, a fluid such as liquid or vapor is used, with which, therefore, concavoconvex parts can be formed not damaging the surface of the separation function layer. As a result, the surface defect ratio of the separation membrane can be reduced to 1% or less.

Here, the surface defect ratio of the separation membrane can be obtained as follows: After pressure forming, the separation membrane is cut into a size of 5 cm x 5 cm, the surface on the side of the separation function layer of the separation membrane is stained using a dye not absorbed by the separation function layer. Subsequently, the separation membrane is washed with running water, and the value obtained by dividing the area of the stained part by the total area of the separation membrane piece (that is, 25 cm$^2$) is referred to as the surface defect ratio. The area of the stained part of the separation membrane can be determined through image analysis of the digital image obtained by scanning the stained separation membrane with a digital scanner.

The type of the dye, the concentration of the dye, the dyeing time and the image analysis software to be used are described in detail in the section of Examples given below.

III. Separation Membrane Element

The above-mentioned separation membrane is applicable to a separation membrane element. With reference to the drawings attached hereto, embodiments of the separation membrane element of the invention are described below.

1. First Embodiment

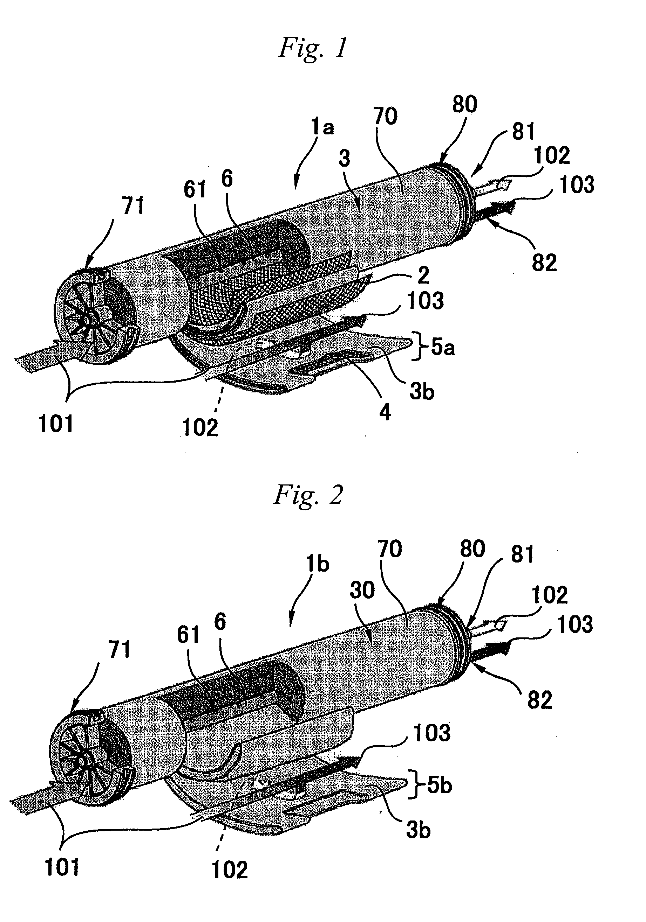

As shown in Fig. 1, the spiral-type separation membrane element 1a separates the raw fluid 101 into a permeated fluid 102 and a concentrated fluid 103. The separation membrane element 1a comprises a perforated water-collecting tube 6, a separation membrane 3b, a first end plate 71, a second end plate 80 and a filament winding 70.

The perforated water-collecting tube 6 is a tube that is hollow inside it, and its surface has a large number of pores each communicating with the inside. As the material of the tube, usable are various materials including hard plastics such as PVC, ABS, etc., or metals such as stainless, etc. The number of the perforated water-collecting tube to be arranged in one separation membrane element is basically 1 (one). As described below, the permeated fluid 102 that has passed through the separation membrane is collected by the perforated water-collecting tube 6.

The separation membrane 3b is arranged to surround the perforated water-collecting tube 6 to form the wound body 3. In other words, the separation membrane element 1a is a so-called spiral-type separation membrane element. As the separation membrane 3a, applicable here is the above-mentioned, concavoconvex parts-having separation membrane.

In this embodiment, as the feed-side passage member to form the passages on the feed side, a polymer-made net 2 is used. As the permeate-side passage member, a woven fabric member that is referred to as a tricot 4 and has finer meshes than those of the feed-side passage member is used, for the purpose of forming the passages on the permeate side while preventing the separation membrane 3 from falling.

The separation membrane 3 a that is put on both surfaces of the permeate-side passage member and is envelope-like adhered thereto forms the envelope-like membrane 5a. The inside of the envelope-like membrane 5a constitutes the permeated fluid passages, and the envelope-like membrane 5a laminated alternately with the net 2 is arranged to spirally surround the perforated water-collecting tube while a predetermined part on the opening side is adhered to the outer peripheral part of the tube.

In this embodiment, the separation membrane 3a is stuck to form the rectangular envelope-like membrane 5a. At one side of the rectangular envelope-like membrane 5a is open, and the opening side is stuck to the perforated water-collecting tube 6 in such a manner that the opening could face the outer periphery the perforated water-collecting tube 6. The envelope-like membrane 5a adhered to the perforated water-collecting tube 6 is arranged to surround the perforated water-collecting tube 6 to form the wound body 3.

The wound body 3 is columnar as its outward appearance. In this embodiment, the two end faces of the wound body 3 in the lengthwise direction of the perforated water-collecting tube 6, or that is, the left end face and the right end face in Fig. 1 are referred to as the first end face and the second end face, respectively.

The filament winding 70 is constituted by so arranging adhesive-impregnated glass fibers as to surround the outermost surface of the separation membrane 3b in the wound body 3. In other words, the filament winding is so arranged as to surround the outer periphery of the wound body 3, or that is, the surface corresponding to the side surface of the columnar shape of the wound body 3. The filament winding 70 thus arranged in that manner prevents the raw fluid 101 from running into the separation membrane element 1a through the outer periphery thereof and enhances the mechanical strength of the separation membrane element. The "outer periphery" may be said to indicate especially the part except the above-mentioned first end face and the second end face of the entire outer periphery of the separation membrane element 1a and the wound body 3. In this embodiment, the filament winding 70 is so arranged as to cover nearly the whole of the outer periphery of the wound body 3.

The first end plate 71 is a porous member having a nearly circular outer edge and is mounted on the first end face of the wound body 3. Via the holes of the first end plate 71, the raw fluid 101 is supplied onto the feed-side surface of the separation membrane 3b in the wound body 3.

The second end plate 80 is provided with the permeated fluid outlet port 81 and the concentrated fluid outlet port 82, and its outer edge is nearly circular. The second end plate 80 is thus mounted on the second end face of the wound body 3, and the permeated fluid outlet port 81 and the concentrated fluid outlet port 82 are arranged at the end part of the wound body 3.

Fluid separation with the separation membrane element 1a is described. In this embodiment, the raw fluid 101 is fed to the first end face while the separation membrane element 1a is arranged inside a pressure container (not shown).

The fed raw fluid 101 is separated into the permeated fluid 102 that has passed through the separation membrane 3b and the concentrated fluid 103 containing the impermeable substances, as shown in Fig. 1. The permeated fluid 102 has passed through the pores 61 and reaches inside the perforated water-collecting tube 6. The permeated fluid 102 having passed through inside the perforated water-collecting tube 6 further runs through the permeated fluid outlet port 81 and is discharged out of the separation membrane element 1a. On the other hand, the concentrated fluid 103 runs through the separation membrane and moves inside the wound body 3, and is finally discharged out of the separation membrane element 1a via the concentrated fluid outlet port 82.

2. Second Embodiment

In the following, the members that have been already described with reference to Fig. 1 are given the same reference numerals or signs and their description is omitted here.

As shown in Fig. 2, the separation membrane element 1b of this embodiment has the same configuration as that of the separation membrane element 1a of the first embodiment except that this has neither a net nor a tricot as the passage members. Specifically, the wound body 30 of the separation membrane element 1b is provided with neither the net 2 nor the tricot 4 shown in Fig. 1, but has only the surrounding envelope-like membrane 5b.

3. Third Embodiment

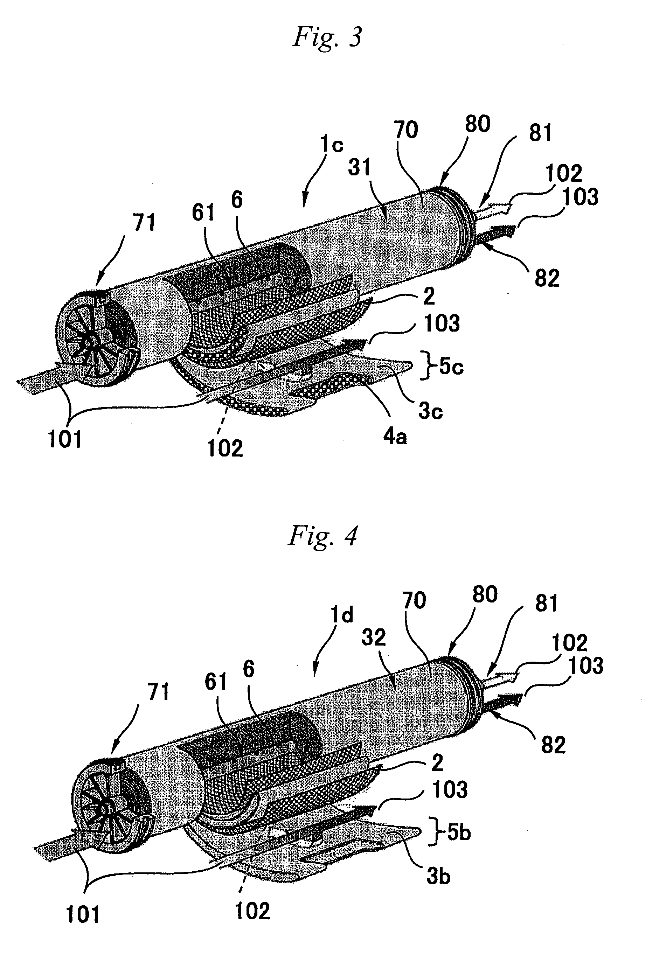

For producing the intended separation membrane element, the permeated passage member is changed to a forming component to produce the element, and the separation membrane element is given running water under pressure to thereby prepare the membrane have concavoconvex parts. A specific configuration is described with reference to Fig. 3.

As shown in Fig. 3, the separation membrane element 1c of this embodiment has the same configuration as that of the conventional spiral-type separation element 1a shown in Fig. 1, except that it has a forming component 4a in place of the tricot 4.

Specifically, in the wound body 31 of the separation membrane element 1c, concavoconvex parts need not to be formed in the separation membrane 3c before fluid application. The forming component 4a is arranged on the permeate-side surface of the separation membrane 3c in the wound body 31.

The raw fluid 101 is applied under pressure to the separation membrane element 1c, whereby the separation membrane 3c is pressed against the forming component 4a by the raw fluid. Accordingly, in the area where the forming component 4a is arranged, the separation membrane 3c protrudes toward the feed side and in the area where the forming component 4a is not arranged, the separation membrane 3c dents toward the permeate side. In that manner, in the separation membrane 3c, concavoconvex parts are formed along the configuration of the forming component 4a by the raw fluid 101 applied under pressure to the first end face of the element. The separation membrane 3c thus having the concavoconvex parts formed therein has the same configuration as that of the concavoconvex parts-having separation membrane described in the above section I.

4. Fourth Embodiment

As shown in Fig. 4, the separation membrane element 1d of this embodiment has the same configuration as that of the separation membrane element 1a of the first embodiment, except that it has the wound body 32 in place of the wound body 3. The wound body 32 may have nearly the same constitution as that of the wound body 3 except that it has the net 2 arranged in the envelope-like membrane 5b but does not have the tricot 4.

5. Fifth Embodiment

The above-mentioned embodiments may be combined. For example, as shown in Fig. 5, the separation membrane element 1e of this embodiment has the same configuration as that of the separation membrane element 1a of the first embodiment, except that it has the wound body 33 in place of the wound body 3. The wound body 33 may have nearly the same constitution as that of the wound body 3 except that it does not have the net 2.

6. Other Embodiments

The feed-side passage member may be any one capable of securing the passages for the raw fluid and the concentrated fluid, and its shape, thickness, composition and others are not defined to any specific ones. For example, as the feed-side passage member, any net heretofore employed in the art is employable here.

The permeate-side passage member may be any one capable of securing the passages for the permeated fluid, and its shape, thickness, composition and others are not defined to any specific ones. For example, as the permeate-side passage member, tricot heretofore employed in the art is employable here.

Embodiments to be obtained by combining the configurations and the embodiments described in different sections are also within the technical scope of the present invention.

IV. Production Method for Separation Membrane Element

Next described is one example of the production method for the separation membrane element.

The production method for the separation membrane element is not specifically defined. One typical method for producing the separation membrane element is described, in which a polyamide separation function layer is laminated on a porous supporting film and a substrate to obtain a separation membrane and then the separation membrane is worked to provide the separation membrane element. The forming method for imparting height differences to the separation membrane may be carried out before, during or after the step of producing the separation membrane as described above.

As mentioned above, two facing separation membranes (for which one separation membrane may be folded) may be adhered to each other.

The adhesive to be used for adhesion is preferably one of which the viscosity falls within a range of from 40 PS to 150 PS, more preferably from 50 PS to 120 PS. In case where the viscosity of the adhesive is 150 PS or less, then the laminated envelope-like membrane is prevented from being wrinkled when the membrane is wound around the perforated water-collecting tube, and therefore the performance of the separation membrane element hardly worsens. When the viscosity of the adhesive is 40 PS or more, then the adhesive is prevented from flowing out at the edges of the envelope-like membrane (at the part of the adhered face) and is therefore prevented from adhering to any unnecessary part to worsen the performance of the separation membrane element. In addition, since the adhesive is prevented from flowing away, the number of the step for removing the adhesive flow is reduced and the working efficiency is thereby enhanced.

Preferably, the amount of the adhesive to be applied is such that the coating width could be from 10 mm to 100 mm after the envelope-like membrane is wound around the perforated water-collecting tube. Within the range, a part of the raw fluid does not flow into the permeate side via the adhesion failed part, and therefore the adhesive region does not expand during the winding operation and the permeation-effective area of the membrane can be prevented from reducing.

As the adhesive, preferred is an urethane adhesive. In order that the adhesive could have a viscosity of from 40 PS to 150 PS, it is desirable that the main ingredient isocyanate and the curing agent polyol are blended in a ratio by weight of isocyanate/polyol of from 1/1 to 1/5. The viscosity of the adhesive is measured with a B-type viscometer (JIS K 6833). Briefly, the main ingredient and the curing agent are measured separately, and a mixture of the two in a predetermined ratio is measured.

A specific production method for the element is described below. A sheet-like separation membrane having height differences formed on the surface thereof is prepared. Using a conventional separation membrane element production apparatus, an urethane adhesive (isocyanate/polyol = 1/3) is applied to the edge of the sheet-like separation membrane, and then the membrane is folded so that one side of the folded membrane could be kept open. In that manner, 26 envelope-type membranes each having a width of 930 mm are prepared in such a manner that the effective area thereof in the separation membrane element to be produced could be 37 $m^2$. A predetermined part of the opening side is adhered to the outer periphery of a perforated water-collecting tube, as spirally wound therearound to prepare a separation membrane element. For the production method for the separation membrane element, referred to are the methods described in references (JP-B-44-14216, JP-B-4-11928, JP-A-11-226366).

V. Use of Separation Membrane Element

The separation membrane elements are, as connected in series or in parallel, cased in a pressure container to construct a separation membrane module.

Further as combined with a pump to supply a fluid thereto and an apparatus for pretreating the fluid or the like, the separation membrane element and the module can construct a fluid separation apparatus. Using the separation apparatus, for example, feed water can be separated into permeate such as drinkable water and concentrate not having passed through the membrane, thereby obtaining water that satisfies the intended purpose.

When the operation pressure for the fluid separation apparatus is higher, then the salt removal ratio could be higher. However, in consideration of the increase in the energy necessary for driving and of the maintenance of the feed passages and the permeate passages, the operation pressure in applying water to be processed to the separation membrane module is preferably from 0.2 MPa to 8 MPa. When the temperature of the feed water is higher, then the salt removal ratio may lower, but when the temperature is lower, then the permeate flux to run through the membrane also decreased. Therefore, the temperature is preferably from 5°C to 45°C. When the pH of the raw fluid is higher and in case where the feed water has a high salt concentration such as seawater, scale of magnesium or the like may form and the membrane may be deteriorated during operation at such a high pH. Accordingly, it is desirable that the apparatus is driven in a neutral region.

The fluid to be treated by the separation membrane element is not specifically defined. When the element is used for treatment of water, the feed water includes a liquid mixture having TDS (total dissolved solids) of from 500 mg/L to 100 g/L, such as seawater, brine water, wastewater, etc. In general, TDS indicates total dissolved solids and is represented by "mass/volume" or "weight ratio". According to the definition, TDS may be computed from the weight of the residues of a solution having passed through a 0.45-micron filter and vaporized at a temperature of from 39.5 to 40.5°C, but in a more simplified manner, TDS can be converted from the practical salinity (S).

VI. Summary

As obvious from the description given hereinabove, this document includes the following technical matters.

(1) A separation membrane having a plurality of concavoconvex parts which have a height difference of from 100 $\mu$m to 2000 $\mu$m and are formed on at least one surface of the separation membrane, wherein an average value d1 of a minimum thickness and an average value d2 of a maximum thickness in the concavoconvex parts satisfy the following relational expression [1]:

$$0.8 \le d1/d2 \le 1.0 \qquad [1]$$

(2) A separation membrane having a surface defect ratio of 1% or less.
(3) The separation membrane of the above (1), wherein the surface defect ratio is 1% or less.
(4) The separation membrane of any of the above (1) to (3), which comprises a substrate and a separation function layer provided on the substrate.
(5) The separation membrane of any of the above (1) to (4), which comprises a substrate, a porous supporting layer provided on the substrate and a separation function layer provided on the porous supporting layer.
(6) The separation membrane of the above (4) or (5), wherein the substrate is a long-fiber nonwoven fabric.
(7) The separation membrane of the above (6) wherein the fibers in the surface layer of the long-fiber nonwoven fabric on the side opposite to the porous supporting layer have a higher longitudinal orientation than the fibers in the surface layer of the long-fiber nonwoven fabric on the porous supporting layer side.
(8) A separation membrane element comprising the separation membrane according to any of the above (1) to (7).
(9) A method for producing a separation membrane, the method comprising:

arranging a forming component on one surface of a work-in-process separation membrane; and

while the forming component is thus kept arranged thereon, pressing the work-in-process separation membrane from the other surface thereof by a liquid or vapor applied thereto, having a temperature of from 50°C to 100°C, thereby forming height differences on the surface of the work-in-process separation membrane.

The techniques of (1) to (7) may be combined in any desired manner, and may be combined with any known technique. The production method of (9) is applicable to production of the separation membrane of any of (1) to (7).

EXAMPLES

The invention is described in more detail with reference to the following Examples, however, the invention is not limited at all by these Examples.

(Amount of Water Production by Separation Membrane)

The amount of permeate that had been obtained in separation of feed water into permeate and concentrate through a separation membrane was represented as the amount of water production by the separation membrane in terms of the amount of the permeate (cubic meter) per square meter of the membrane surface per day ($m^3/m^2/day$).

(Salt Removal Ratio by Separation Membrane)

The feed water and permeate were examined for the electric conductivity, and the salt removal ratio was determined according to the following equation.

$$\text{Salt Removal Ratio (TDS Removal Ratio) (\%)}$$

$$= \{1\text{-(TDS concentration in permeate)/(TDS concentration in feed water)}\} \times 100$$

(Amount of Water Production by Separation Membrane Element)

The amount of permeate that had been obtained in separation of feed water into permeate and concentrate through a separation membrane element was represented as the amount of water production by the separation membrane element in terms of the amount of the permeate (cubic meter) through one element in one day ($m^3/day$).

(Salt Removal Ratio by Separation Membrane Element)

The feed water, permeate and concentrate were examined for the electric conductivity, and the salt removal ratio was determined according to the following equation.

$$\text{Salt Removal Ratio (TDS Removal Ratio) (\%)}$$

$$= \{1\text{-}(2 \times \text{TDS concentration in permeate})/(\text{TDS concentration in feed water} + \text{TDS}$$

$$\text{concentration in concentrate})\} \times 100$$

(Chemical-Resistant Stability)

The separation membrane or the separation membrane element was immersed in an aqueous sulfuric acid solution conditioned at 25°C and pH of 3, for 1 hour, and then washed with pure water, followed by immersing in an aqueous sodium hydroxide adjusted to the pH of 11, for 1 hour. Then, an operation of washing with pure water was repeated for a total of 20 times. Subsequently, from the amount of permeate as separated from the feed water through the separation membrane or the separation membrane element, the amount of water production after the chemical treatment was computed; and from the electric conductivity of the feed water, the permeate and the concentrate, the salt removal ratio was computed. Regarding the chemical-resistant stability, those through which the change in the amount of water production and the salt removal ratio is smaller before and after the chemical treatment are influenced less by the chemical, or that is, the chemical-resistant stability thereof is higher.

(Height Differences on Separation Membrane Surface)

Using a high-precision configuration analysis system, Keyence's KS-1100, the surface of a sample of 5 cm x 5 cm was analyzed and the average height difference was computed from the found data. The height difference between the highest part of a convex part and the lowest part of the concave part adjacent to the convex part was measured. From the found data, the average height difference was computed. The height differences smaller than 10 $\mu$m were omitted, and the parts having a height difference of 10 $\mu$m or more were measured. The found height values were summed up, and divided by the number of the analyzed sites (100 sites). Three samples were analyzed in that manner, and the data were averaged to obtain the height difference of the analyzed membrane.

(Average value d1 of Minimum Thickness and Average value d2 of Maximum Thickness in Concavoconvex Parts)

Using an ultrahigh-resolution field emission-type scanning electron microscope (UHR-FE-SEM), the cross section of the separation membrane was examined. The found data were analyzed for the average value d1 of the minimum thickness and the average value d2 of the maximum thickness in the concavoconvex parts. Within the horizontal distance between the highest part of one high part and the highest part of another high part adjacent to the one high part in the separation membrane surface having a height difference of 10 $\mu$m or more, the minimum thickness and the maximum thickness were measured in the direction perpendicular to the thickness direction. 100 concavoconvex parts having height differences were measured, and the found height values were summed up and divided by the number of the analyzed sites (100 sites) to obtain the average value d1 of the minimum thickness and the average value d2 of the maximum thickness.

(Degree of Orientation of Fibers of Substrate)

Ten small samples were collected at random from a nonwoven fabric, and using a scanning electronic microscope, 100-power to 1000-power photographic pictures of those samples were taken. 20 fibers were selected at random from each sample, totaling 100 fibers. The lengthwise direction (longitudinal direction) of the nonwoven fabric was referred to as 0° and the cross direction (lateral direction of the nonwoven fabric was referred to as 90°C; and under the condition, the angle of each fiber was measured. The found data were averaged, and the average value was rounded from the first decimal place to the closest whole number to be the fiber orientation degree of the analyzed fabric.

(Surface defect ratio of Separation Membrane)

After formed, the separation membrane was cut into a size of 5 cm x 5 cm, and using an aqueous 500-ppm methyl violet solution, the sample was stained from the surface side of the separation membrane, for 10 minutes. Subsequently, this was washed with running water for 10 minutes, and then dried to obtain a stained sample. The stained separation membrane was scanned with a digital scanner (Canon's CanoScan N676U), and the obtained digital image was analyzed with an image analyzer (Image J). The surface defect ratio of the separation membrane was computed as: surface defect ratio (%) of separation membrane = 100 x (area of stained part of separation membrane/cut area). The data of the surface defect ratio of the separation membrane were rounded at the third decimal place thereof.

(Example 1)

On a nonwoven fabric of polyester long fibers (fiber size: 1 decitex, thickness: about 90 $\mu$m, air permeability: 1 cc/cm$^2$/sec, fiber orientation degree: 40° in the surface layer on the porous supporting layer side; 20° in the surface layer opposite to the porous supporting layer), a solution of 15.0 wt.% polysulfone in dimethylformamide (DMF) was cast in a thickness of 180 $\mu$m, at room temperature (25°C). Immediately, this was dipped in pure water and left therein for 5 minutes to produce a roll of a porous supporting layer (thickness 130 $\mu$m) of a fiber-reinforced polysulfone supporting film.

Subsequently, the porous supporting film roll was unrolled, and an aqueous solution of 1.5 wt.% m-PDA and 4.0 wt.% $\varepsilon$-caprolactam was applied onto the polysulfone surface. Via an air nozzle, nitrogen was sprayed onto it to thereby remove the excessive aqueous solution from the surface of the supporting film, and then an n-decane solution containing 0.05% by weight of trimesic acid chloride at 25°C was applied thereto so that the surface could be completely wetted with the solution. Subsequently, the excessive solution was removed by air blowing from the film, and then the film was washed with hot water at 80°C to give a separation film roll. The obtained separation film was driven with feed water with 500 mg/L salt, under a driving pressure of 0.5 MPa and at a driving temperature of 25°C at pH of 6.5 (recovery ratio 15%), whereupon the separation membrane performance was: salt removal ratio of 99.1 % and water production amount of 0.80 m$^3$/m$^2$/day (the separation membrane performance is shown in Table 2).

Next, the separation film continuous sheet roll was unrolled and cut into a predetermined size. The net-like forming component shown in Table 1 was arranged on the back (permeated fluid side) of the separation membrane, and hot water at 95°C was applied to the surface (fed fluid side) of the separation membrane under a pressure of 2.0 MPa for 5 minutes, thereby forming height differences on the surface of the separation membrane. The forming component was formed of polypropylene. In this, the pitch of the forming component in the Table indicates the horizontal distance from the highest point of one high part to the highest point of the other adjacent high part on the surface of the forming component. 200 points were analyzed, and the found data were averaged. After forming, the separation membrane performance was: salt removal ratio of 99.2% and water production amount of 0.84 m$^3$/m$^2$/day. As compared with the date before working for concavoconvex shape formation, the water production amount increased to a certain degree. After chemical treatment of the separation membrane with an acid or alkali aqueous solution, the separation membrane performance was: salt removal ratio of 99.1% and water production amount of 0.85 m$^3$/m$^2$/day. No performance change was found before and after the chemical treatment.

In the Table, PA means polyamide, PSf means polysulfone, and PET means polyethylene terephthalate.

Table 1

| | Forming Condition | | | | | | Summary of Separation Membrane | |
| --- | --- | --- | --- | --- | --- | --- | --- | --- |
| | Forming component | | | Fluid | Pressure (MPa) | Temperature (°C) | Configuration | Thickness (μm) |
| | Shape | Thickness (μm) | Pitch (mm) | | | | | |
| Example 1 | net-like | 800 | 5 | water | 2 | 95 | PA/PSf/PET nonwoven fabric | -/40/90 |
| Example 2 | net-like | 800 | 5 | water | 2 | 80 | PA/PSf/PET nonwoven fabric | -/40/90 |
| Example 3 | net-like | 800 | 5 | water | 2 | 50 | PA/PSf/PET nonwoven fabric | -/40/90 |
| Example 4 | net-like | 300 | 3 | water | 2 | 95 | PA/PSf/PET nonwoven fabric | -/40/90 |
| Example 5 | net-like | 2000 | 12 | water | 2 | 95 | PA/PSf/PET nonwoven fabric | -/40/90 |
| Example 6 | columnar | 600 | 4 | water | 2 | 95 | PA/PSf/PET nonwoven fabric | -/40/90 |
| Example 7 | net-like | 800 | 5 | air | 2 | 95 | PA/PSf/PET nonwoven fabric | -/40/90 |
| Example 8 | net-like | 800 | 5 | water | 2 | 95 | PA/PSf/PET paper | -/40/85 |
| Example 9 | net-like | 800 | 5 | water | 2 | 95 | PA/PSf/PET paper | -/40/85 |
| Example 10 | net-like | 800 | 5 | water | 2 | 95 | PA/PSf/PET nonwoven fabric | -/55/90 |
| Example 11 | net-like | 800 | 5 | water | 2 | 25 | PA/PSf/PET nonwoven fabric | -/40/90 |
| Comparative Example 1 | net-like | 800 | 5 | air | 2 | 120 | PA/PSf/PET nonwoven fabric | -/40/90 |
| Comparative Example 2 | net-like | 3000 | 18 | water | 2 | 95 | PA/PSf/PET nonwoven fabric | -/40/90 |
| Comparative Example 3 | rhombic convex shapes | 500 (emboss depth) | 4 | - | 2 | 95 | PA/PSf/PET nonwoven fabric | -/40/90 |

EP 2 614 881 A1

(continued)

| | Forming Condition | | | | | | Summary of Separation Membrane | |
|---|---|---|---|---|---|---|---|---|
| | Forming component | | | Fluid | Pressure (MPa) | Temperature (°C) | Configuration | Thickness ($\mu$m) |
| | Shape | Thickness ($\mu$m) | Pitch (mm) | | | | | |
| Comparative Example 4 | rhombic convex shapes | 500 (emboss depth) | 4 | - | 5 | 120 | PA/PSf/PET nonwoven fabric | -/40/90 |
| Comparative Example 5 | square convex shapes | 1000 (sheet concavoconvex height) | 6 | - | 2 | 90 | PA/PSf/PET nonwoven fabric | -/40/90 |
| PA thickness was about 0.1 $\mu$m. | | | | | | | | |

Table 2

| | Before Working for Concavoconvex Formation | | After Working for Concavoconvex Formation | | After Chemical Treatment | | Height Difference (μm) | Minimum Thickness d1 (μm) | Maximum Thickness d2 (μm) | d1/d2 | Surface defect ratio Separation Membrane (%) | Remarks |
|---|---|---|---|---|---|---|---|---|---|---|---|---|
| | Salt Removal Ratio (%) | Water Production Amount ($m^3/m^2$/day) | Salt Removal Ratio (%) | Water Production Amount ($m^3/m^2$/day) | Salt Removal Ratio (%) | Water Production Amount ($m^3/m^2$/day) | | | | | | |
| Ex. 1 | 99.1 | 0.80 | 99.2 | 0.84 | 99.1 | 0.85 | 455 | 106 | 123 | 0.86 | 0.85 | |
| Ex. 2 | | | 99.2 | 0.89 | 99.1 | 0.87 | 430 | 113 | 123 | 0.92 | 0.73 | |
| Ex. 3 | | | 98.8 | 0.93 | 98.7 | 0.95 | 360 | 111 | 125 | 0.89 | 0.75 | |
| Ex. 4 | | | 98.9 | 0.83 | 98.9 | 0.85 | 125 | 98 | 120 | 0.82 | 0.80 | |
| Ex. 5 | | | 98.9 | 0.87 | 98.5 | 0.90 | 1420 | 95 | 117 | 0.81 | 0.92 | |
| Ex. 6 | | | 98.4 | 0.88 | 98.1 | 0.91 | 510 | 97 | 121 | 0.80 | 0.94 | |
| Ex. 7 | | | 99.1 | 0.91 | 99.0 | 0.90 | 440 | 104 | 122 | 0.85 | 0.69 | |
| Ex. 8 | 99.0 | 0.79 | 98.0 | 0.83 | 97.3 | 0.87 | 380 | 101 | 119 | 0.85 | 0.98 | |
| Ex. 9 | 98.9 | 0.78 | 97.4 | 0.84 | 96.3 | 0.90 | 355 | 96 | 117 | 0.82 | 0.95 | |
| Ex. 10 | 98.1 | 0.54 | 98.1 | 0.57 | 98.0 | 0.56 | 450 | 99 | 122 | 0.81 | 0.83 | |
| Ex. 11 | 99.1 | 0.80 | 98.4 | 0.82 | 97.4 | 0.88 | 260 | 104 | 125 | 0.83 | 1.32 | |
| Comp. Ex. 1 | | | - | - | - | - | 485 | 92 | 121 | 0.76 | 24.70 | |
| Comp. Ex. 2 | | | 97.4 | 0.84 | 96.1 | 0.89 | 2150 | 92 | 115 | 0.80 | 0.99 | |
| Comp. Ex. 3 | | | 96.9 | 0.88 | 94.7 | 1.01 | 185 | 94 | 127 | 0.74 | 1.47 | emboss forming |
| Comp. Ex. 4 | | | 95.7 | 0.82 | 91.6 | 0.88 | 290 | 66 | 129 | 0.51 | 2.75 | emboss forming |
| Comp. Ex. 5 | | | 97.2 | 0.85 | 95.8 | 0.90 | 410 | 84 | 126 | 0.67 | 0.99 | calender forming |

(Examples 2 and 3)

Example 2 was under the same condition as in Example 1 except that the forming temperature was 80°C. The salt removal ratio was 99.2%, and the water production amount was 0.89 $m^3/m^2$/day. As compared with that with the separation membrane obtained in Example 1, the water production amount increased to a certain degree. The chemical treatment provided no performance change.

Example 3 was under the same condition as in Example 1 except that the forming temperature was 50°C. The salt removal ratio was 98.8%, and the water production amount was 0.93 $m^3/m^2$/day. As compared with those with the separation membrane obtained in Example 1, the salt removal ratio lowered to a certain degree but the water production amount increased. The chemical treatment provided no performance change.

(Examples 4 and 5)

Example 4 was under the same condition as in Example 1 except that the thickness of the forming component was 300 $\mu$m and the pitch thereof was 3 mm. The salt removal ratio was 98.9%, and the water production amount was 0.83 $m^3/m^2$/day. As compared with that with the separation membrane obtained in Example 1, the salt removal ratio lowered to a certain degree. The chemical treatment provided no performance change.

Example 5 was under the same condition as in Example 1 except that the thickness of the forming component was 2000 $\mu$m and the pitch thereof was 12 mm. The salt removal ratio was 98.9%, and the water production amount was 0.87 $m^3/m^2$/day. As compared with those with the separation membrane obtained in Example 1, the salt removal ratio lowered to a certain degree, but the water production amount increased to a certain degree. The chemical treatment lowered the salt removal ratio in some degree, but increased the water production amount in some degree.

(Example 6)

This was under the same condition as in Example 1 except that the shape of the forming component was columnar, the thickness thereof was 600 $\mu$m and the pitch thereof was 4 mm. The salt removal ratio was 98.4%, and the water production amount was 0.88 $m^3/m^2$/day. As compared with those with the separation membrane obtained in Example 1, the salt removal ratio lowered to a certain degree, but the water production amount increased to a certain degree. The chemical treatment lowered the salt removal ratio in some degree, but increased the water production amount in some degree.

(Example 7)

This was under the same condition as in Example 1 except that the forming fluid was air. The salt removal ratio was 99.1 %, and the water production amount was 0.91 $m^3/m^2$/day. As compared with that with the separation membrane obtained in Example 1, the water production amount increased. The chemical treatment provided no performance change.

(Example 8)

This was under the same condition as in Example 1 except that the substrate was changed from the long-fiber nonwoven fabric to a nonwoven fabric produced according to a papermaking method. The separation membrane performance before working for concavoconvex formation was: salt removal ratio of 99.0% and water production amount of 0.79 $m^3/m^2$/day, and was on the same level as that of the separation membrane before working for concavoconvex formation in Example 1. However, in this, the formability in giving the concavoconvex shapes to the surface of the separation membrane was low, and therefore the salt removal ratio after working for concavoconvex formation lowered to 98.0%. The chemical treatment lowered the salt removal ratio to 97.3%.

(Example 9)

This was under the same condition as in Example 8 except that the fiber orientation degree of the substrate was 20° in the surface layer on the porous supporting layer side and was 40° in the surface layer opposite to the porous supporting layer.

As a result, the separation membrane performance before working for concavoconvex formation was: salt removal ratio of 98.9% and water production amount of 0.78 $m^3/m^2$/day, and was on the same level as that of the separation membrane before working for concavoconvex formation in Example 1. However, in this, the formability was low, and therefore the salt removal ratio after working for concavoconvex formation lowered to 97.4%. The chemical treatment lowered the salt removal ratio to 96.3%.

(Example 10)

Cellulose diacetate (CDA) and cellulose triacetate (CTA) were used as resin; and acetone and dioxane were used as solvent. As additives, methanol, maleic acid (MA) and butanetetracarboxylic acid (BTC) were added to these and sufficiently stirred at 45°C to prepare a liquid concentrate composed of CDA 10% by weight, CTA 7% by weight, acetone 25% by weight, dioxane 45% by weight, methanol 10% by weight, MA 1% by weight and BTC 2% by weight.
Next, the liquid concentrate was cooled to 25°C, and applied onto a nonwoven fabric of polyester long fibers (fiber size: 1 decitex, thickness: about 90 $\mu$m, air permeability: 1 cc/cm$^2$/sec, fiber orientation degree: 40° in the surface layer on the porous supporting layer side; 20° in the surface layer opposite to the porous supporting layer) in a thickness of 200 $\mu$, and while air was applied thereto at a wind speed of 0.2 m/sec, the solvent was evaporated away for 60 seconds. Subsequently, this was immersed in a coagulation bath at 15°C for 30 minutes to coagulate the resin, and further heat-treated in a hot bath at 75°C for 5 minutes thereby obtaining a separation membrane with a porous resin layer (that is, separation function layer) formed on the substrate. The obtained separation film was driven with feed water with 500 mg/L salt, under a driving pressure of 0.5 MPa and at a driving temperature of 25°C at pH of 6.5 (recovery ratio 15%), whereupon the separation membrane performance was: salt removal ratio of 98.1 % and water production amount of 0.54 m$^3$/m$^2$/day.
Under the same condition as in Example 1, the separation membrane was worked for concavoconvex formation. After forming, the separation membrane performance was: salt removal ratio of 98.1% and water production amount of 0.57 m$^3$/m$^2$/day. As compared with the date before working for concavoconvex shape formation, the water production amount increased to a certain degree. The chemical treatment provided no performance change.

(Example 11)

This was under the same condition as in Example 1 except that the fluid temperature in forming was 25°C. However, since the formability of the separation function layer, the porous supporting layer and the substrate was low, the salt removal ratio lowered to 98.4%. The chemical treatment lowered the salt removal ratio to 97.4%.

(Comparative Example 1)

Air was used as the fluid in forming, and the fluid temperature during forming was 120°C. As a result, the average value d1 of the minimum thickness and the average value d2 of the maximum thickness in the concavoconvex parts fell outside the scope of the present invention, and the surface defect ratio of the separation membrane was 24.70% and was high. The separation membrane could not be evaluated for the salt removal ratio and the water production amount.

(Comparative Example 2)

This was under the same condition as in Example 1 except that the thickness of the forming component was 3000 $\mu$m and the pitch thereof was 18 mm. The height differences in the surface of the separation membrane were more than 2000 $\mu$m, and as compared with that with the separation membranes obtained in Examples 1 to 10, the salt removal ratio lowered. Further, the chemical treatment further lowered the salt removal ratio, but increased the water production amount in some degree.

(Comparative Examples 3 and 4)

Using an emboss roll having rhombic convex shapes on the surface thereof, the surface of the separation membrane was embossed. As a result, the ratio of the average value d1 of the minimum thickness to the average value d2 of the maximum thickness in the concavoconvex parts was lower than 0.80; and as compared with that with the separation membranes obtained in Examples 1 to 11, the salt removal ratio greatly lowered. In addition, the chemical treatment further lowered the salt removal ratio, but increased the water production amount in some degree.
In Comparative Example 4, the forming pressure was 5 MPa and the roll temperature was 120°C; and in this, the salt removal ratio further lowered.

(Comparative Example 5)

A separation membrane was laminated with a PP-made square convex parts-having sheet and calendered (90°C, 2 MPa). As a result, the ratio of the average value d1 of the minimum thickness to the average value d2 of the maximum thickness in the concavoconvex parts was lower than 0.8; and as compared with that with the separation membranes obtained in Examples 1 to 11, the salt removal ratio greatly lowered. In addition, the chemical treatment further lowered the salt removal ratio, but increased the water production amount in some degree.

(Example 12, Comparative Example 6)

On a nonwoven fabric of polyester long fibers (fiber size: 1 decitex, thickness: about 90 $\mu$m, air permeability: 1 cc/cm$^2$/sec, fiber orientation degree: 40° in the surface layer on the porous supporting layer side; 20° in the surface layer opposite to the porous supporting layer), a solution of 15.0 wt.% polysulfone in dimethylformamide (DMF) was cast in a thickness of 180 $\mu$m, at room temperature (25°C). Immediately, this was dipped in pure water and left therein for 5 minutes to produce a roll of a porous supporting layer (thickness 130 $\mu$m) of a fiber-reinforced polysulfone supporting film.

Subsequently, the porous supporting film roll was unrolled, and an aqueous solution of 1.5 wt.% m-PDA and 4.0 wt.% $\varepsilon$-caprolactam was applied onto the polysulfone surface. Via an air nozzle, nitrogen was sprayed onto it to thereby remove the excessive aqueous solution from the surface of the supporting film, and then an n-decane solution containing 0.05% by weight of trimesic acid chloride at 25°C was applied thereto so that the surface could be completely wetted with the solution. Subsequently, the excessive solution was removed by air blowing from the film, and then the film was washed with hot water at 80°C to obtain a separation film roll.

Next, the separation film continuous sheet roll was unrolled and cut into a predetermined size. The net-like forming component shown in Table 3 was arranged on the back (permeated fluid side) of the separation membrane, and hot water at 95°C was applied to the surface (fed fluid side) of the separation membrane under a pressure of 2.0 MPa, thereby forming height differences on the surface of the separation membrane (the process up to this was the same as in Example 1). With that, the leaf-like separation membrane was folded to have an effective area of 37 m$^2$ in a separation membrane element. 26 those leaf-like membranes each having a width of 930 mm were prepared. These 26 leaf-like membranes were laminated in such a manner that the folded side could step out in the lamination direction and the other three sides than the folded side were bonded to the adjacent leaf-like membranes. DSC of the substrate gave an exothermic peak at around 95°C.

In this, the pitch of the forming component in the Table indicates the horizontal distance from the peak of one convex part (the highest point of one convex part) to the peak of the other adjacent convex part on the surface of the forming component. 200 points were analyzed, and the found data were averaged.

The leaf-like laminate was spirally wound around a center tube in such a manner that the folded side of the separation membrane could be inside relative to the radial direction of the tube to thereby construct a separation membrane element. A film was wound around the outer periphery and fixed with a tape, and thereafter the edges were cut, end plates were fixed and a filament winding was arranged to produce an 8-inch element.

The element was put into a pressure container, driven with feed water with 500 mg/L salt under a driving pressure of 0.5 MPa and at a driving temperature of 25°C at pH of 6.5 (recovery ratio 15%). The performance under the condition is shown in Table 4.

In Comparative Example 6, net (thickness: 900 $\mu$m, fiber diameter: about 550 $\mu$m, pitch: 3 mm) was used as the feed-side passage member and tricot (thickness: 300 $\mu$m, groove width: 200 $\mu$m, ridge width: 300 $\mu$m, groove depth: 105 $\mu$m) was used as the permeate-side passage member, without using pressurized water at 95°C for forming concavoconvex parts.

In the following Examples and Comparative Examples where tricot and net were used as the passage members, the same ones as in Comparative Example 6 were used.

In Example 12, the water production amount lowered in some degree as compared with that in Comparative Example 6, but the chemical resistance was good, and even though the feed-side passage member and the permeate-side passage member were not used, the separation membrane element secured sufficient performance. Not using the passage members provides a cost advantage.

Table 3

| | Element Configuration | | | Forming Condition | | | | | | Summary of Separation Membrane | |
|---|---|---|---|---|---|---|---|---|---|---|---|
| | Separation Membrane | Passage Member | | Forming component | | | Fluid | Pressure (MPa) | Temperature (°C) | Configuration | Thickness (μm) |
| | | Feed side | Permeate Side | Shape | Thickness (μm) | Pitch (mm) | | | | | |
| Ex. 12 | concavoconvex parts-having membrane | - | - | net-like | 800 | 5 | water | 2 | 95 | PA/PSf/PET nonwoven fabric | -/40/90 |
| Ex. 13 | concavoconvex parts-having membrane | - | - | net-like | 800 | 5 | water | 2 | 80 | PA/PSf/PET nonwoven fabric | -/40/90 |
| Ex. 14 | concavoconvex parts-having membrane | - | - | net-like | 800 | 5 | water | 2 | 50 | PA/PSf/PET nonwoven fabric | -/40/90 |
| Ex. 15 | concavoconvex parts-having membrane | - | - | net-like | 300 | 3 | water | 2 | 95 | PA/PSf/PET nonwoven fabric | -/40/90 |
| Ex. 16 | concavoconvex parts-having membrane | - | - | net-like | 2000 | 12 | water | 2 | 95 | PA/PSf/PET nonwoven fabric | -/40/90 |
| Ex. 17 | concavoconvex parts-having membrane | - | - | columnar | 600 | 4 | water | 2 | 95 | PA/PSf/PET nonwoven fabric | -/40/90 |
| Ex. 18 | concavoconvex parts-having membrane | - | - | net-like | 800 | 5 | air | 2 | 95 | PA/PSf/PET nonwoven fabric | -/40/90 |
| Ex. 19 | concavoconvex parts-having membrane | - | - | net-like | 800 | 5 | water | 2 | 95 | PA/PSf/PET paper | -/40/85 |

| | Element Configuration | | | Forming Condition | | | | | | Summary of Separation Membrane | |
|---|---|---|---|---|---|---|---|---|---|---|---|
| | Separation Membrane | Passage Member | | Forming component | | | Fluid | Pressure (MPa) | Temperature (°C) | Configuration | Thickness (μm) |
| | | Feed side | Permeate Side | Shape | Thickness (μm) | Pitch (mm) | | | | | |
| Ex. 20 | concavoconvex parts-having membrane | - | - | net-like | 800 | 5 | water | 2 | 95 | PA/PSf/PET paper | -/40/85 |
| Ex. 21 | concavoconvex parts-having membrane | - | - | net-like | 800 | 5 | water | 2 | 95 | PA/PSf/PET nonwoven fabric | -/55/90 |
| Ex. 22 | concavoconvex parts-having membrane | net | - | net-like | 800 | 5 | water | 2 | 95 | PA/PSf/PET nonwoven fabric | -/40/90 |
| Ex. 23 | concavoconvex parts-having membrane | - | tricot | net-like | 800 | 5 | water | 2 | 95 | PA/PSf/PET nonwoven fabric | -/40/90 |
| Ex. 24 | concavoconvex parts-having membrane | net | tricot | net-like | 800 | 5 | water | 2 | 95 | PA/PSf/PET nonwoven fabric | -/40/90 |
| Ex. 25 | concavoconvex parts-having membrane | net | forming component | net-like | 800 | 5 | water | 2 | 95 | PA/PSf/PET nonwoven fabric | -/40/90 |
| Ex. 26 | concavoconvex parts-having membrane | net | forming component | net-like | 800 | 5 | water | 2 | 80 | PA/PSf/PET nonwoven fabric | -/40/90 |
| Ex. 27 | concavoconvex parts-having membrane | net | forming component | net-like | 800 | 5 | water | 2 | 50 | PA/PSf/PET nonwoven fabric | -/40/90 |
| Ex. 28 | concavoconvex parts-having membrane | - | - | net-like | 800 | 5 | water | 2 | 25 | PA/PSf/PET nonwoven fabric | -/40/90 |

(continued)

| | Element Configuration | | | Forming Condition | | | | | | Summary of Separation Membrane | |
|---|---|---|---|---|---|---|---|---|---|---|---|
| | Separation Membrane | Passage Member | | Forming component | | | Fluid | Pressure (MPa) | Temperature (°C) | Configuration | Thickness (µm) |
| | | Feed side | Permeate Side | Shape | Thickness (µm) | Pitch (mm) | | | | | |
| Comp. Ex. 6 | flat membrane | net | tricot | - | - | - | - | - | - | PA/PSf/PET nonwoven fabric | -/40/90 |
| Comp. Ex. 7 | concavoconvex parts-having membrane | - | - | net-like | 3000 | 18 | water | 2 | 95 | PA/PSf/PET nonwoven fabric | -/40/90 |
| Comp. Ex. 8 | concavoconvex parts-having membrane | - | - | net-like | 300 | 3 | water | 0.3 | 95 | PA/PSf/PET nonwoven fabric | -/40/90 |
| Comp. Ex. 9 | concavoconvex parts-having membrane | - | - | rhombic convex shapes | 500 (emboss depth) | 4 | - | 2 | 95 | PA/PSf/PET nonwoven fabric | -/40/90 |
| PA thickness was about 0.1 µm. | | | | | | | | | | | |

Table 4

| | Before Chemical Treatment | | After Chemical Treatment | | Height Difference (μm) | Minimum Thickness d1 (μm) | Maximum Thickness d2 (μm) | dl/d2 | Surface defect ratio of ratio Separation Membrane (%) | Remarks |
|---|---|---|---|---|---|---|---|---|---|---|
| | Salt Removal Ratio (%) | Water Production Amount (m³/day) | Salt Removal Ratio (%) | Water Production Amount (m³/day) | | | | | | |
| Example 12 | 99.2 | 27.1 | 99.1 | 27.9 | 455 | 106 | 123 | 0.86 | 0.85 | |
| Example 13 | 99.2 | 28.9 | 99.0 | 29.0 | 430 | 113 | 123 | 0.92 | 0.73 | |
| Example 14 | 98.9 | 30.9 | 98.8 | 30.4 | 360 | 111 | 125 | 0.89 | 0.75 | |
| Example 15 | 99.0 | 26.8 | 98.4 | 28.4 | 125 | 98 | 120 | 0.82 | 0.80 | |
| Example 16 | 98.8 | 28.8 | 98.4 | 29.1 | 1420 | 95 | 117 | 0.81 | 0.92 | |
| Example 17 | 98.6 | 28.6 | 98.2 | 30.0 | 510 | 97 | 121 | 0.80 | 0.94 | |
| Example 18 | 98.9 | 30.0 | 99.0 | 30.6 | 440 | 104 | 122 | 0.85 | 0.69 | |
| Example 19 | 98.2 | 26.6 | 97.4 | 27.1 | 380 | 101 | 119 | 0.85 | 0.98 | |
| Example 20 | 97.2 | 26.8 | 96.1 | 26.9 | 355 | 96 | 117 | 0.82 | 0.95 | |
| Example 21 | 98.4 | 20.4 | 98.5 | 20.1 | 450 | 99 | 122 | 0.81 | 0.83 | |
| Example 22 | 99.3 | 27.9 | 99.1 | 27.4 | 455 | 106 | 123 | 0.86 | 0.85 | |
| Example 23 | 99.2 | 28.7 | 99.1 | 29.3 | 455 | 106 | 123 | 0.86 | 0.85 | |
| Example 24 | 99.2 | 28.1 | 99.0 | 30.1 | 455 | 106 | 123 | 0.86 | 0.82 | |
| Example 25 | 99.0 | 24.7 | 98.7 | 24.7 | 460 | 104 | 122 | 0.85 | 0.81 | |
| Example 26 | 99.1 | 24.8 | 99.0 | 25.1 | 430 | 106 | 124 | 0.85 | 0.80 | |
| Example 27 | 98.9 | 25.9 | 98.7 | 26.6 | 345 | 106 | 126 | 0.84 | 0.77 | |
| Example 28 | 97.2 | 29.1 | 96.1 | 29.6 | 260 | 96 | 117 | 0.82 | 1.32 | |

EP 2 614 881 A1

33

(continued)

| | Before Chemical Treatment | | After Chemical Treatment | | Height Difference (μm) | Minimum Thickness d1 (μm) | Maximum Thickness d2 (μm) | dl/d2 | Surface defect ratio of Separation Membrane (%) | Remarks |
|---|---|---|---|---|---|---|---|---|---|---|
| | Salt Removal Ratio (%) | Water Production Amount (m³/day) | Salt Removal Ratio (%) | Water Production Amount (m³/day) | | | | | | |
| Comparative Example 6 | 99.0 | 29.7 | 99.0 | 30.1 | 12 | 125 | 130 | 0.96 | 0.59 | conventional separation membrane element |
| Comparative Example 7 | 96.1 | 28.1 | 95.4 | 28.5 | 2150 | 92 | 115 | 0.80 | 0.99 | |
| Comparative Example 8 | 98.3 | 22.3 | 98.2 | 22.7 | 65 | 105 | 121 | 0.87 | 0.75 | |
| Comparative Example 9 | 97.4 | 27.0 | 95.4 | 28.1 | 185 | 94 | 127 | 0.74 | 1.47 | |

EP 2 614 881 A1

(Examples 13 and 14)

Example 13 was under the same condition as in Example 12 except that the forming temperature was 80°C. The salt removal ratio was 99.2%, and the water production amount was 28.9 m$^3$/day. As compared with that with the separation membrane element obtained in Example 12, the water production amount increased to a certain degree. The chemical treatment provided no performance change.

Example 14 was under the same condition as in Example 12 except that the forming temperature was 50°C. The salt removal ratio was 98.9%, and the water production amount was 30.9 m$^3$/day. As compared with those with the separation membrane element obtained in Example 12, the salt removal ratio lowered to a certain degree but the water production amount increased. The chemical treatment provided no performance change.

(Examples 15 and 16)

Example 15 was under the same condition as in Example 12 except that the thickness of the forming component was 300 $\mu$m and the pitch thereof was 3 mm. The salt removal ratio was 99.0%, and the water production amount was 26.8 m$^3$/day. As compared with that with the separation membrane element obtained in Example 12, the salt removal ratio lowered to a certain degree. The chemical treatment lowered the salt removal ratio in some degree.

Example 16 was under the same condition as in Example 12 except that the thickness of the forming component was 2000 $\mu$m and the pitch thereof was 12 mm. The salt removal ratio was 98.8%, and the water production amount was 28.8 m$^3$/day. As compared with those with the separation membrane element obtained in Example 12, the salt removal ratio lowered to a certain degree, but the water production amount increased to a certain degree. The chemical treatment lowered the salt removal ratio in some degree.

(Example 17)

This was under the same condition as in Example 12 except that the shape of the forming component was columnar, the thickness thereof was 600 $\mu$m and the pitch thereof was 4 mm. The salt removal ratio was 98.6%, and the water production amount was 28.6 m$^3$/day. As compared with those with the separation membrane element obtained in Example 12, the salt removal ratio lowered to a certain degree, but the water production amount increased to a certain degree. The chemical treatment lowered the salt removal ratio in some degree, but increased the water production amount in some degree.

(Example 18)

This was under the same condition as in Example 12 except that the forming fluid was air. The salt removal ratio was 98.9%, and the water production amount was 30.0 m$^3$/day. As compared with that with the separation membrane element obtained in Example 12, the water production amount increased. The chemical treatment provided no performance change.

(Example 19)

This was under the same condition as in Example 12 except that the substrate was changed from the long-fiber nonwoven fabric to a nonwoven fabric produced according to a papermaking method. However, in this, the formability in giving the concavoconvex shapes to the surface of the separation membrane was low, and therefore the salt removal ratio lowered to 98.2%. The chemical treatment lowered the salt removal ratio to 97.4%.

(Example 20)

This was under the same condition as in Example 19 except that the fiber orientation degree of the substrate was 20° in the surface layer on the porous supporting layer side and was 40° in the surface layer opposite to the porous supporting layer. However, in this, the formability was low, and therefore the salt removal ratio lowered to 97.2%. The chemical treatment lowered the salt removal ratio to 96.1%.

(Example 21)

Cellulose diacetate (CDA) and cellulose triacetate (CTA) were used as resin; and acetone and dioxane were used as solvent. As additives, methanol, maleic acid (MA) and butanetetracarboxylic acid (BTC) were added to these and fully stirred at 45°C to prepare a liquid concentrate composed of CDA 10% by weight, CTA 7% by weight, acetone 25% by weight, dioxane 45% by weight, methanol 10% by weight, MA 1% by weight and BTC 2% by weight.

Next, the liquid concentrate was cooled at 25°C, and applied onto a nonwoven fabric of polyester long fibers (fiber size: 1 decitex, thickness: about 90 $\mu$m, air permeability: 1 cc/cm$^2$/sec, fiber orientation degree: 40° in the surface layer on the porous supporting layer side; 20° in the surface layer opposite to the porous supporting layer) in a thickness of 200 $\mu$, and while air was applied thereto at a wind speed of 0.2 m/sec, the solvent was evaporated away for 60 seconds. Subsequently, this was immersed in a coagulation bath at 15°C for 30 minutes to coagulate the resin, and further heat-treated in a hot bath at 75°C for 5 minutes thereby obtaining a separation membrane with a porous resin layer (that is, separation function layer) formed on the substrate. The separation membrane was worked for forming concavoconvex parts thereon under the same condition as in Example 12, and the element performance was checked. The salt removal ratio was 98.4% and water production amount was 20.4 m$^3$/day. The chemical treatment provided no performance change.

(Example 22)

This was under the same condition as in Example 12 except that net was used as the feed-side passage member. The salt removal ratio was 99.3%, and water production amount was 27.9 m$^3$/day. As compared with that with the separation membrane element obtained in Example 12, the water production amount increased in some degree. The chemical treatment provided no performance change.

(Example 23)

This was under the same condition as in Example 12 except that tricot was used as the permeate-side passage member. The salt removal ratio was 99.2%, and water production amount was 28.7 m$^3$/day. As compared with that with the separation membrane element obtained in Example 12, the water production amount increased in some degree. The chemical treatment increased the water production amount in some degree.

(Example 24)

This was under the same condition as in Example 12 except that net was used as the feed-side passage member and tricot was used as the permeate-side passage member. The salt removal ratio was 99.2%, and water production amount was 28.1 m$^3$/day. As compared with that with the separation membrane element obtained in Example 12, the water production amount increased in some degree. The chemical treatment increased the water production amount in some degree.

(Example 25)

On a nonwoven fabric of polyester long fibers (fiber size: 1 decitex, thickness: about 90 $\mu$m, air permeability: 1 cc/cm$^2$/sec, fiber orientation degree: 40° in the surface layer on the porous supporting layer side; 20° in the surface layer opposite to the porous supporting layer), a solution of 15.0 wt.% polysulfone in dimethylformamide (DMF) was cast in a thickness of 180 $\mu$m, at room temperature (25°C). Immediately, this was dipped in pure water and left therein for 5 minutes to produce a roll of a porous supporting layer (thickness 130 $\mu$m) of a fiber-reinforced polysulfone supporting film.

Subsequently, the porous supporting film roll was unrolled, and an aqueous solution of 1.5 wt.% m-PDA and 4.0 wt.% $\varepsilon$-caprolactam was applied onto the polysulfone surface. Via an air nozzle, nitrogen was sprayed onto it to thereby remove the excessive aqueous solution from the surface of the supporting film, and then an n-decane solution containing 0.05% by weight of trimesic acid chloride at 25°C was applied thereto so that the surface could be completely wetted with the solution. Subsequently, the excessive solution was removed by air blowing from the film, and then the film was washed with hot water at 80°C to give a separation film roll. (The process up to this is the same as in Example 1.)

Next, the separation film continuous sheet roll was unrolled and cut into a predetermined size. Net serving as a feed-side passage member, and net (thickness 800 $\mu$m, fiber size 500 $\mu$m, pitch 5 mm) serving as a forming component in place of the permeate-side passage member were laminated. With that, the leaf-like separation membrane was folded to have an effective area of 37 m$^2$ in a separation membrane element. 26 those leaf-like membranes each having a width of 930 mm were prepared. These 26 leaf-like membranes were laminated in such a manner that the folded side could step out in the lamination direction and the other three sides than the folded side were bonded to the adjacent leaf-like membranes.

The leaf-like laminate was spirally wound around a center tube in such a manner that the folded side of the separation membrane could be inside relative to the radial direction of the tube to thereby construct a separation membrane element. A film was wound around the outer periphery and fixed with a tape, and thereafter the edges were cut, end plates were fixed and a filament winding was arranged to produce an 8-inch element. The element was put into a pressure container, and hot water at 95°C was applied to the surface of the separation membrane under a pressure of 2.0 MPa, thereby forming height differences on the surface of the separation membrane inside the element. The performance of the separation membrane element thus obtained in the manner as above was checked. The salt removal ratio was 99.0%, and the water production amount was 24.7 m$^3$/day. The chemical treatment provided no performance change.

(Examples 26 and 27)

Example 26 was under the same condition as in Example 25 except that the forming temperature was 80°C. The salt removal ratio was 99.1 %, and the water production amount was 24.8 m$^3$/day. In this, a separation membrane element having the same performance level as that in Example 25 was obtained. The chemical treatment provided no performance change.
Example 27 was under the same condition as in Example 25 except that the forming temperature was 50°C. The salt removal ratio was 98.9%, and the water production amount was 25.9 m$^3$/day. As compared with that with the separation membrane element obtained in Example 25, the water production amount increased in some degree. The chemical treatment increased the water production amount in some degree.

(Example 28)

This was under the same condition as in Example 12 except that the fluid temperature in forming was 25°C. Since the formability of the separation function layer, the porous supporting layer and the support was poor, the salt removal ratio lowered. The chemical treatment lowered the salt removal ratio to 97.4%.

(Comparative Example 7)

This was under the same condition as in Example 12 except that the thickness of the forming component was 3000 $\mu$m and the pitch thereof was 18 mm. The height differences in the surface of the separation membrane were more than 2000 $\mu$m, and the salt removal ratio lowered. Further, the chemical treatment lowered the salt removal ratio, but increased the water production amount in some degree.

(Comparative Example 8)

This was under the same condition as in Example 12 except that the thickness of the forming component was 300 $\mu$m and the pitch thereof was 3 mm, and the forming pressure was 0.3 MPa. The height differences in the surface of the separation membrane were less than 100 $\mu$m, and as a result, the feed side and permeate-side passages formability was poor, and the water production ratio significantly lowered.

(Comparative Example 9)

Using an emboss roll having rhombic convex shapes on the surface thereof, the surface of the separation membrane was embossed. As a result, the ratio of the average value d1 of the minimum thickness to the average value d2 of the maximum thickness in the concavoconvex parts was lower than 0.8, and the salt removal ratio greatly lowered. In addition, the chemical treatment further lowered the salt removal ratio, but increased the water production amount in some degree.
As described above, the separation membrane and the separation membrane element obtained according to the present invention have excellent water production performance, safe drivability and excellent removal performance.

INDUSTRIAL APPLICABILITY

The separation membrane and the separation membrane element of the invention are favorably used for salt removal especially from brine water or seawater.

DESCRIPTION OF REFERENCE NUMERALS AND SIGNS

1a, 1b, 1c, 1d, 1e:    Separation Membrane Element

(continued)

| | |
|---|---|
| 2: | Net (feed-side passage member) |
| 3a, 3b, 3c: | Separation Membrane |
| 3, 30, 31, 32, 33: | Wound Body |
| 4: | Tricot (permeate-side passage member) |
| 5a, 5b, 5c: | Envelope-like Membrane |
| 6: | Perforated Water-Collecting Tube |
| 71, 80: | First End Plate, Second End Plate |
| 81: | Permeated Fluid Outlet Port |
| 82: | Concentrated Fluid Outlet Port |
| 70: | Filament Winding |
| 101: | Raw Fluid |
| 102: | Permeated Fluid |
| 103: | Concentrated Fluid |

**Claims**

1. A separation membrane having a plurality of concavoconvex parts which have a height difference of from 100 $\mu$m to 2000 $\mu$m and are formed on at least one surface of the separation membrane,
wherein an average value d1 of a minimum thickness and an average value d2 of a maximum thickness in the concavoconvex parts satisfy the following relational expression [1]:

$$0.8 \leq d1/d2 \leq 1.0 \qquad [1]$$

2. The separation membrane according to claim 1, which has a surface defect ratio of 1% or less.

3. The separation membrane according to claim 1 or 2, which comprises a substrate and a separation function layer provided on the substrate.

4. The separation membrane according to claim 1 or 2, which comprises a substrate, a porous supporting layer provided on the substrate and a separation function layer provided on the porous supporting layer.

5. The separation membrane according to claim 3 or 4, wherein the substrate is a long-fiber nonwoven fabric.

6. The separation membrane according to claim 5, wherein fibers in a surface layer of the long-fiber nonwoven fabric on a side opposite to the porous supporting layer have a higher longitudinal orientation than fibers in a surface layer of the long-fiber nonwoven fabric on a porous supporting layer side.

7. A separation membrane element comprising the separation membrane according to any of claims 1 to 6.

8. A method for producing a separation membrane, the method comprising:

arranging a forming component on one surface of a work-in-process separation membrane; and
while the forming component is thus kept arranged thereon, pressing the work-in-process separation membrane from the other surface thereof by a liquid or vapor applied thereto, having a temperature of from 50°C to 100°C, thereby forming height differences on the surface of the work-in-process separation membrane.

*Fig. 1*

*Fig. 2*

*Fig. 3*

*Fig. 4*

## Fig. 5

## Fig. 6

*Fig. 7*

*Fig. 8*

| INTERNATIONAL SEARCH REPORT | International application No. |
|---|---|
| | PCT/JP2011/070240 |

A.  CLASSIFICATION OF SUBJECT MATTER
*B01D69/00*(2006.01)i, *B01D69/10*(2006.01)i, *B01D69/12*(2006.01)i

According to International Patent Classification (IPC) or to both national classification and IPC

B.  FIELDS SEARCHED

Minimum documentation searched (classification system followed by classification symbols)
B01D69/00, B01D69/10, B01D69/12

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2010-099591 A  (Nitto Denko Corp.),<br>06 May 2010 (06.05.2010),<br>claims 3, 4; paragraphs [0011], [0012], [0036]<br>to [0050]<br>(Family: none) | 1,2,7<br>3-8 |
| Y | JP 09-276671 A  (Toray Industries, Inc.),<br>28 October 1997 (28.10.1997),<br>paragraph [0046]<br>& US 6277282 B1 | 3-7 |
| Y | JP 2009-154393 A  (SCIVAX Corp.),<br>16 July 2009 (16.07.2009),<br>claims 1 to 12; paragraph [0015]<br>& US 2011/0024948 A1    & EP 2239127 A1 | 8 |

| ☒   Further documents are listed in the continuation of Box C. | ☐   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    05 December, 2011 (05.12.11) | Date of mailing of the international search report<br>    13 December, 2011 (13.12.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/070240 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-247453 A  (Toray Industries, Inc.), 21 September 2006 (21.09.2006), claim 3 (Family: none) | 8 |

Form PCT/ISA/210 (continuation of second sheet) (July 2009)

## REFERENCES CITED IN THE DESCRIPTION

### Patent documents cited in the description

- JP 2006247453 A
- JP 11114381 A
- JP 2010099590 A
- JP 2010125418 A
- JP 4414216 B
- JP 4011928 B
- JP 11226366 A